# EUROPÄISCHE PATENTSCHRIFT

(11) **EP 4 438 997 B1**
(45) Veröffentlichungstag und Bekanntmachung des Hinweises auf die Patenterteilung: **29.10.2025**
(21) Anmeldenummer: 24162705.8
(22) Anmeldetag: 11.03.2024
(51) Int. Cl.: F41H 7/00, B60R 21/13

(54) **GESCHÜTZTES FAHRZEUG MIT ÜBERROLLSCHUTZSYSTEM**
PROTECTED VEHICLE WITH ROLLOVER PROTECTION SYSTEM
VÉHICULE PROTÉGÉ AVEC SYSTÈME DE PROTECTION CONTRE LE RETOURNEMENT

(30) Priorität: 30.03.2023 DE 102023108235
(43) Veröffentlichungstag der Anmeldung: 02.10.2024
(73) Patentinhaber: Rheinmetall Landsysteme GmbH, 29345 Südheide (DE)
(72) Erfinder: SEEGER, Martin, 34117 Kassel (DE); BLÄßING, Dr., Tobias, 34314 Hohenkirchen/Espenau (DE); GERLACH, Klaus-Peter, 34212 Melsungen (DE); BECKMANN, Armin, 34621 Frielendorf (DE)
(74) Vertreter: HKW Intellectual Property PartG mbB

(56) Entgegenhaltungen:
- US-A1- 2006 138 763
- US-A1- 2016 001 731
- US-B2- 7 413 247

## Beschreibung

Die vorliegende Erfindung betrifft ein Überrollschutzsystem für ein geschütztes Fahrzeug und ein geschütztes Fahrzeug mit einem derartigen Überrollschutzsystem.

Geschützte Fahrzeuge, wie beispielsweise Schützenpanzer, weisen gemäß betriebsinternen Erkenntnissen oftmals eine unübersichtliche Fahrzeuggeometrie auf. Dies kann es erforderlich machen, dass einzelne Besatzungsmitglieder über Luke fahren. Dies kann stehend oder sitzend erfolgen. "Über Luke" heißt dabei, dass der Oberkörper oder zumindest der Kopf des jeweiligen Besatzungsmitglieds aus einer Lukenöffnung des geschützten Fahrzeugs in eine Umgebung des geschützten Fahrzeugs hineinragt. Dies kann zum Beispiel für die Unterstützung des Fahrers durch den Kommandanten oder für eine bessere Führbarkeit des geschützten Fahrzeugs im zivilen Straßenverkehr erforderlich sein. Dieser Umstand kann dazu führen, dass im Falle eines Überschlags des geschützten Fahrzeugs das über Luke fahrende Besatzungsmitglied tödlichen Gefahren ausgesetzt ist. Im schlimmsten Fall kann es dazu kommen, dass das Besatzungsmitglied durch das sich überschlagende geschützte Fahrzeug zerquetscht und somit tödlich verletzt wird.

Die US 2016/0001731 A1 beschreibt ein Turm-Airbag-System, das eine Vielzahl von Airbags enthält, die innerhalb eines Turms angeordnet sind, um einen Insassen des Turms vor Verletzungen und/oder einem Herausschleudern aus dem Turm zu schützen.

Die US 2006/0138763 A1 beschreibt eine Fahrzeugsicherheitsvorrichtung für Fahrzeuge mit offenem Verdeck, die einen Überrollbügel aufweist, der an ein vorhandenes Fahrzeug geschweißt wird und mit Sensoren ausgestattet ist, die bei einem Überschlag des Fahrzeugs die Auslösung von Airbags triggern, um das Verdeck und die Seiten des Fahrer- und Fahrgastraums abzudecken.

Die US 7,413,247 B2 beschreibt eine weitere Fahrzeugsicherheitsvorrichtung für Fahrzeuge, wobei die Vorrichtung auf einen Auslöser reagiert, sodass sich eine Insassenstütze zurückzieht und den Insassen aktiv in den Fahrzeuginnenraum zieht.

Vor diesem Hintergrund besteht eine Aufgabe der vorliegenden Erfindung darin, ein verbessertes Überrollschutzsystem für ein geschütztes Fahrzeug zur Verfügung zu stellen.

Demgemäß wird ein geschütztes Fahrzeug mit einem Überrollschutzsystem vorgeschlagen. Das Überrollschutzsystem umfasst eine Schutzhülle zum Schützen eines sich teilweise innerhalb und teilweise außerhalb des geschützten Fahrzeugs aufhaltenden Besatzungsmitglieds bei einem Überschlag des geschützten Fahrzeugs und einen der Schutzhülle zugeordneten Aktor, wobei der Aktor dazu eingerichtet ist, die Schutzhülle unmittelbar vor oder bei dem Überschlag des geschützten Fahrzeugs von einem zusammengefalteten Zustand in einen auseinandergefalteten Zustand zu verbringen, und wobei das Überrollschutzsystem derart an dem geschützten Fahrzeug montierbar ist, dass die Schutzhülle in dem auseinandergefalteten Zustand zumindest teilweise außerhalb des geschützten Fahrzeugs angeordnet ist und so Bereiche des Besatzungsmitglieds, die während des Überschlags außerhalb des geschützten Fahrzeugs angeordnet sind, zumindest abschnittsweise umhüllt, sodass sich das geschützte Fahrzeug bei einem Überschlag zunächst auf der Schutzhülle abstützt. Das Überrollschutzsystem umfasst ferner eine Sensorik, die dazu eingerichtet ist, eine Verkippung des geschützten Fahrzeugs um zumindest eine Raumrichtung zu erfassen, eine Regel- und Steuereinheit, die dazu eingerichtet ist, den Aktor basierend auf Sensorsignalen der Sensorik derart anzusteuern, dass der Aktor die Schutzhülle unmittelbar vor oder bei dem Überschlag des geschützten Fahrzeugs von dem zusammengefalteten Zustand in den auseinandergefalteten Zustand verbringt, ein Tragelement zum Tragen des Besatzungsmitglieds, und eine Verstelleinheit zum Verstellen einer Höhenposition des Tragelements, wobei die Regel- und Steuereinheit dazu eingerichtet ist, die Verstelleinheit basierend auf Sensorsignalen der Sensorik derart anzusteuern, dass die Verstelleinheit unmittelbar vor oder bei dem Überschlag des geschützten Fahrzeugs die Höhenposition des Tragelements derart verstellt, dass sich das Besatzungsmitglied vollständig in das geschützte Fahrzeug hineinverlagert.

Dadurch, dass die Schutzhülle in dem auseinandergefalteten Zustand die außerhalb des geschützten Fahrzeugs angeordneten Bereiche des Besatzungsmitglieds zumindest abschnittsweise umhüllt, stützt sich das geschützte Fahrzeug bei einem Überschlag zunächst auf der Schutzhülle ab, wodurch das Besatzungsmitglied Zeit erhält, sich vollständig in das geschützte Fahrzeug zurückzuziehen. Hierdurch wird die Gefahr von Verletzungen des Besatzungsmitglieds durch das sich überschlagende geschützte Fahrzeug signifikant reduziert.

Unter einem "Überrollschutzsystem" ist vorliegend demgemäß bevorzugt kein System zu verstehen, welches ein Überrollen oder einen Überschlag des geschützten Fahrzeugs an sich verhindert, sondern ein System, welches mögliche negative Folgen eines Überschlags des geschützten Fahrzeugs für das Besatzungsmitglied verhindert oder zumindest reduziert. Das Überrollschutzsystem kann auch als Überrollschutzvorrichtung bezeichnet werden. Das Überrollschutzsystem kann bevorzugt an geschützten Fahrzeugen, die ab Werk noch kein derartiges Überrollschutzsystem aufweisen, nachgerüstet werden. Das Überrollschutzsystem ist demgemäß nachrüstbar. Das Überrollschutzsystem ist bevorzugt modular aufgebaut. Das heißt insbesondere, dass das Überrollschutzsystem als Nachrüstmodul an dem geschützten Fahrzeug angebracht werden kann.

Alternativ kann das geschützte Fahrzeug auch ab Werk mit einem derartigen Überrollschutzsystem ausgerüstet werden.

Darunter, dass das Fahrzeug "geschützt" ist, ist vorliegend insbesondere zu verstehen, dass das geschützte Fahrzeug gegen Beschuss, Sprengfallen, unkonventionelle Spreng- oder Brandvorrichtungen (USBV, Engl.: Improvised Explosive Devices, IED), Minen oder dergleichen geschützt ist. Hierzu kann das geschützte Fahrzeug gepanzert sein. Das geschützte Fahrzeug kann ein Kettenfahrzeug oder ein Radfahrzeug sein. Nachfolgend wird davon ausgegangen, dass das geschützte Fahrzeug ein Radfahrzeug ist. Das geschützte Fahrzeug kann mehrere Radachsen aufweisen, an denen Räder vorgesehen sind. Beispielsweise sind vier Radachsen mit acht Rädern vorgesehen. Es können jedoch auch weniger oder mehr als vier Radachsen vorgesehen sein.

Das geschützte Fahrzeug weist vorzugsweise eine geschützte Fahrzeugzelle auf. Die geschützte Fahrzeugzelle kann insbesondere ein austauschbares Missionsmodul des geschützten Fahrzeugs sein. Ein Beispiel für ein derartiges Missionsmodul ist ein Sanitätsmodul. Das geschützte Fahrzeug, insbesondere die geschützte Fahrzeugzelle, weist beispielsweise eine geneigte Vorderwand und ein Dach auf.

An dem geschützten Fahrzeug oder an der geschützten Fahrzeugzelle können eine oder mehrere Lukenöffnungen vorgesehen sein. Jeder Lukenöffnung kann ein derartiges Überrollschutzsystem zugeordnet sein. Ferner kann jede Lukenöffnung mit Hilfe eines beweglichen, insbesondere verschiebbaren oder verschwenkbaren, Lukendeckels geöffnet und geschlossen werden. Die Lukenöffnung oder die Lukenöffnungen können an einer Wandung des geschützten Fahrzeugs oder der geschützten Fahrzeugzelle vorgesehen sein. Die Wandung kann Teil des vorgenannten Dachs oder der vorgenannten Vorderwand sein.

Dass sich das Besatzungsmitglied "teilweise innerhalb und teilweise außerhalb" des geschützten Fahrzeugs aufhält oder befindet, kann vorliegend bedeuten, dass das Besatzungsmitglied beispielsweise seinen Oberkörper, insbesondere zumindest seinen Kopf, aus einer wie zuvor erwähnten Lukenöffnung streckt, um über Luke zu fahren. In diesem Fall kann sich beispielsweise der Unterkörper des Besatzungsmitglieds in einem Innenraum des geschützten Fahrzeugs oder der geschützten Fahrzeugzelle befinden, wobei sich der Oberkörper außerhalb dieses Innenraums in einer Umgebung des geschützten Fahrzeugs befindet. "Teilweise innerhalb und teilweise außerhalb" ist vorliegend insbesondere so zu verstehen, dass sich das Besatzungsmitglied gleichzeitig teilweise innerhalb und teilweise außerhalb des Innenraums aufhält.

Dem geschützten Fahrzeug ist bevorzugt ein Koordinatensystem mit einer ersten Raumrichtung, Längsrichtung oder x-Richtung, einer zweiten Raumrichtung, Hochrichtung oder y-Richtung und einer dritten Raumrichtung, Querrichtung oder z-Richtung zugeordnet. Die Richtungen sind insbesondere senkrecht zueinander orientiert. Eine Bewegung des geschützten Fahrzeugs um die x-Richtung kann als Rollen oder Rollbewegung bezeichnet werden. Eine Bewegung des geschützten Fahrzeugs um die y-Richtung kann als Gieren oder Gierbewegung bezeichnet werden. Eine Bewegung des geschützten Fahrzeugs um die z-Richtung kann als Nicken oder Nickbewegung bezeichnet werden. Eine Fahrtrichtung des geschützten Fahrzeugs ist vorzugsweise entgegen der x-Richtung orientiert. Das geschützte Fahrzeug kann sich jedoch auch - beispielsweise bei einer Rückwärtsfahrt - entgegen der Fahrtrichtung fortbewegen.

Unter einem "Überschlag" des geschützten Fahrzeugs ist vorliegend insbesondere zu verstehen, dass sich das geschützte Fahrzeug zumindest von den Rädern auf das Dach oder auf die Vorderwand dreht. Dies schließt jedoch nicht aus, dass sich das geschützte Fahrzeug bei dem Überschlag zumindest einmal oder auch mehrmals um die bevorzugt senkrecht zu den Radachsen orientierte x-Richtung und/oder um die bevorzugt parallel zu den Radachsen orientierte z-Richtung überschlägt oder dreht. Ein Überschlag des geschützten Fahrzeugs kann auch eine kombinierte Roll-, Gier- und/oder Nickbewegung sein. "Unmittelbar vor dem Überschlag" kann vorliegend bedeuten, dass die Schutzhülle Bruchteile von Sekunden vor dem eigentlichen Überschlag ausgelöst wird. Dies kann basierend auf Sensorsignalen einer Sensorik des Überrollschutzsystems erfolgen.

In dem auseinandergefalteten Zustand ist die Schutzhülle bevorzugt vollständig außerhalb des geschützten Fahrzeugs, insbesondere außerhalb des Innenraums des geschützten Fahrzeugs, angeordnet. Demgemäß ist die Schutzhülle in dem auseinandergefalteten Zustand derselben auch bevorzugt vollständig außerhalb der geschützten Fahrzeugzelle angeordnet. Die Schutzhülle kann auch als Schutzschild oder als Schutzschirm bezeichnet werden. Die Begriffe "Schutzhülle", "Schutzschild" und "Schutzschirm" können demgemäß vorliegend beliebig gegeneinander getauscht werden.

Die Schutzhülle ist bevorzugt flexibel. Die Schutzhülle kann daher auch als flexible Schutzhülle bezeichnet werden. "Flexibel" in diesem Zusammenhang bedeutet insbesondere, dass die Schutzhülle durch einen geringen Kraftaufwand verformt werden kann. Somit kann die Schutzhülle beispielsweise durch ein Fluid in Form eines Gases von dem zusammengefalteten Zustand in den auseinandergefalteten Zustand verbracht werden. Die Schutzhülle wird in diesem Fall insbesondere aufgeblasen oder expandiert. Das heißt insbesondere, dass die Schutzhülle aufblasbar oder expandierbar ist. Die Schutzhülle kann daher auch als aufblasbare Schutzhülle oder als expandierbare Schutzhülle bezeichnet werden.

"Flexibel" ist jedoch vorliegend nicht zwingend gleichzusetzen damit, dass die Schutzhülle elastisch verformt, insbesondere gedehnt, werden kann. Das heißt insbesondere, dass die Schutzhülle bevorzugt nicht elastisch verformbar ist. Eine elastische Verformbarkeit der Schutzhülle ist jedoch nicht grundsätzlich auszuschließen. Beispielsweise kann die Schutzhülle aus einem Fasergewebe aufgebaut sein oder ein Fasergewebe aufweisen. Die Schutzhülle kann mehrschichtig oder mehrlagig aufgebaut sein.

Dass die Schutzhülle das Besatzungsmitglied "schützt", bedeutet vorliegend insbesondere, dass die Schutzhülle verhindert, dass das Besatzungsmitglied zwischen dem geschützten Fahrzeug und einem Untergrund, auf dem sich das geschützte Fahrzeug fortbewegt, eingeklemmt wird. Die Schutzhülle ist dabei bevorzugt nicht zwingend derart ausgelegt, dass diese eine Gewichtskraft des geschützten Fahrzeugs vollständig tragen kann, sondern derart, dass das Besatzungsmitglied im Vergleich zu einem geschützten Fahrzeug ohne ein derartiges Überrollschutzsystem genug Zeit gewinnt, dass sich das Besatzungsmitglied vor einem Kontakt des Besatzungsmitglieds mit dem Untergrund oder mit in der Umgebung des geschützten Fahrzeugs angeordneten Objekten in den Innenraum zurückziehen kann.

Alternativ ist es jedoch auch möglich, das Überrollschutzsystem derart auszulegen, dass das Überrollschutzsystem, insbesondere die Schutzhülle, grundsätzlich dazu geeignet ist, die gesamte Gewichtskraft des geschützten Fahrzeugs zu tragen. In diesem Fall kann die Schutzhülle zum Verbringen derselben von dem zusammengefalteten Zustand in den auseinandergefalteten Zustand beispielsweise mit einem inkompressiblen Fluid in Form einer Flüssigkeit befüllt werden. Auch eine Befüllung der Schutzhülle mit einem expandierenden Schaum ist möglich.

Der Aktor kann auch als Aktuator oder als Stellelement bezeichnet werden. Der Schutzhülle können mehrere derartige Aktoren zugeordnet sein. Nachfolgend wird jedoch auf nur einen Aktor eingegangen. Der Aktor kann beispielsweise explosionsartig ein wie zuvor erwähntes Fluid, insbesondere ein Gas, freisetzen. Insbesondere ist der Aktor dazu geeignet, Energie umzuwandeln, um die Schutzhülle von dem zusammengefalteten Zustand in den auseinandergefalteten Zustand zu verbringen. Beispielsweise kann der Aktor chemische Energie in mechanische Energie umwandeln. Der Aktor kann ein, insbesondere pyrotechnischer, Gasgenerator sein. Dies ist jedoch nicht zwingend erforderlich.

Der zusammengefaltete Zustand kann auch als zusammengelegter Zustand oder zusammengerollter Zustand der Schutzhülle bezeichnet werden. Der auseinandergefaltete Zustand kann demgemäß auch als auseinandergelegter Zustand oder ausgerollter Zustand der Schutzhülle bezeichnet werden. Insbesondere ist das Verbringen der Schutzhülle von dem zusammengefalteten Zustand in den auseinandergefalteten Zustand irreversibel. Die Schutzhülle kann daher nach einem einmaligen Verbringen derselben von dem zusammengefalteten Zustand in den auseinandergefalteten Zustand ausgetauscht werden. Alternativ kann die Schutzhülle jedoch auch wieder von dem auseinandergefalteten Zustand zurück in den zusammengefalteten Zustand verbracht werden. In dem zusammengefalteten Zustand nimmt die Schutzhülle insbesondere einen deutlich kleineren Bauraum ein als in dem auseinandergefalteten Zustand.

Die Montierbarkeit des Überrollschutzsystems an dem geschützten Fahrzeug ergibt sich daraus, dass das Überrollschutzsystem, beispielsweise die Schutzhülle, an der zuvor erwähnten Wandung des geschützten Fahrzeugs, insbesondere der geschützten Fahrzeugzelle, angebracht werden kann. Hierzu können geeignete Befestigungselemente vorgesehen sein. Insbesondere wird das Überrollschutzsystem derart an dem geschützten Fahrzeug angebracht, dass die Schutzhülle in dem auseinandergefalteten Zustand vollständig außerhalb des geschützten Fahrzeugs und damit auch vollständig außerhalb des Innenraums des geschützten Fahrzeugs angeordnet ist. Das heißt insbesondere, dass sich die Schutzhülle bei dem Verbringen derselben von dem zusammengefalteten Zustand in den auseinandergefalteten Zustand in die Umgebung des geschützten Fahrzeugs hinein entfaltet.

Beispielsweise kann die Schutzhülle in dem auseinandergefalteten Zustand die Bereiche des Besatzungsmitglieds, die außerhalb des geschützten Fahrzeugs angeordnet sind, ringförmig umhüllen. Insbesondere kann die Schutzhülle diese vorgenannten Bereiche des Besatzungsmitglieds vollständig umschließen oder umhüllen. Die Bereiche des Besatzungsmitglieds, die außerhalb des geschützten Fahrzeugs oder außerhalb der geschützten Fahrzeugzelle angeordnet sind, umfassen beispielsweise den Kopf des Besatzungsmitglieds. Die vorgenannten Bereiche des Besatzungsmitglieds können jedoch auch den Oberkörper und/oder die Arme des Besatzungsmitglieds umfassen.

Gemäß einer Ausführungsform weist das Überrollschutzsystem mehrere Schutzhüllen auf, die in ihrem auseinandergefalteten Zustand um die Bereiche des Besatzungsmitglieds, die außerhalb des geschützten Fahrzeugs angeordnet sind, einen zu einer Umgebung des geschützten Fahrzeugs hin abgetrennten Schutzraum bilden.

Die Anzahl der Schutzhüllen ist grundsätzlich beliebig. Beispielsweise können zwei derartige Schutzhüllen vorgesehen sein. Es können jedoch auch mehr als zwei Schutzhüllen vorgesehen sein. Es ist beispielsweise möglich, vier Schutzhüllen vorzusehen, die entlang von vier Seitenkanten der zuvor erwähnten Lukenöffnung angeordnet sind. Diese Schutzhüllen können in diesem Fall in dem auseinandergefalteten Zustand dreieckförmig sein und bilden zusammen eine pyramidenförmige Geometrie, die den Schutzraum umschließt. In diesem Fall ist dann auch der Schutzraum pyramidenförmig. Die Schutzhüllen können in dem auseinandergefalteten Zustand grundsätzlich jede beliebige dreidimensionale Form einnehmen. Beispielsweise können die Schutzhüllen schalenförmig sein. So kann beispielsweise ein halbkugelförmiger oder kuppelförmiger Schutzraum verwirklich werden. Der Schutzraum kann durch eine geeignete Gestaltung der Schutzhüllen auch kegelstumpfförmig ausgebildet sein.

Gemäß einer weiteren Ausführungsform weist das Überrollschutzsystem eine Trägereinheit auf, in der die Schutzhülle in dem zusammengefalteten Zustand aufgenommen ist, wobei die Schutzhülle in dem auseinandergefalteten Zustand zumindest teilweise außerhalb der Trägereinheit angeordnet ist.

Es können mehrere Trägereinheiten vorgesehen sein. Insbesondere ist jeder Schutzhülle eine Trägereinheit zugeordnet. Nachfolgend wird auf nur eine Trägereinheit eingegangen. Die Trägereinheit kann kastenförmig sein. Beispielsweise kann eine einzige rahmenförmige Trägereinheit vorgesehen sein, welche vollständig um die Lukenöffnung umläuft. In dieser Trägereinheit ist dann eine rahmenförmige oder ringförmige Schutzhülle aufgenommen. Bei dem Verbringen der Schutzhülle von dem zusammengefalteten Zustand in den auseinandergefalteten Zustand wird die Schutzhülle explosionsartig aus der Trägereinheit heraus entfaltet. Dabei bleibt die Schutzhülle jedoch bevorzugt mit der Trägereinheit oder mit der Wandung des geschützten Fahrzeugs oder der geschützten Fahrzeugzelle verbunden. Die Verbindung der Schutzhülle mit der Wandung kann dabei unmittelbar oder mittelbar sein. "Unmittelbar" bedeutet vorliegend, dass die Schutzhülle direkt mit der Wandung verbunden ist. "Mittelbar" bedeutet vorliegend beispielsweise, dass die Schutzhülle mit der Trägereinheit verbunden ist und die Trägereinheit wiederum mit der Wandung verbunden ist. Die Trägereinheit kann mitsamt der Schutzhülle ausgetauscht werden.

Gemäß einer weiteren Ausführungsform öffnet die Schutzhülle bei dem Verbringen derselben von dem zusammengefalteten Zustand in den auseinandergefalteten Zustand die Trägereinheit, insbesondere entlang einer Sollbruchstelle.

Die Trägereinheit kann beispielsweise einen aufklappbaren Deckel aufweisen, welcher bei dem Verbringen der Schutzhülle von dem zusammengefalteten Zustand in den auseinandergefalteten Zustand von der sich entfaltenden Schutzhülle aufgestoßen wird. In diesem Fall kann die Schutzhülle beispielsweise manuell wieder zusammengefaltet und in die Trägereinheit eingelegt werden. Somit können die Schutzhülle und die Trägereinheit erneut verwendet werden. Alternativ kann die Trägereinheit mitsamt der Schutzhülle jedoch auch ein Einwegbauteil sein. In diesem Fall kann die Trägereinheit beispielsweise zumindest abschnittsweise aus einem Kunststoffmaterial gefertigt sein. An der Trägereinheit kann dann eine wie zuvor erwähnte Sollbruchstelle in Form einer Perforation vorgesehen sein. Wird die Schutzhülle von dem zusammengefalteten Zustand in den auseinandergefalteten Zustand verbracht, so reißt die Trägereinheit entlang der Sollbruchstelle auf und die Schutzhülle entfaltet sich aus der Trägereinheit heraus und somit in die Umgebung des geschützten Fahrzeugs hinein.

Gemäß einer weiteren Ausführungsform ist die Trägereinheit an einer Außenseite des geschützten Fahrzeugs montierbar.

Die zuvor erwähnte Wandung des geschützten Fahrzeugs, insbesondere der geschützten Fahrzeugzelle, weist bevorzugt die der Umgebung des geschützten Fahrzeugs zugewandte Außenseite und eine dem Innenraum des geschützten Fahrzeugs, insbesondere der geschützten Fahrzeugzelle, zugewandte Innenseite auf. Die Trägereinheit ist an der Außenseite montiert. Beispielsweise ist die Trägereinheit mit der Außenseite der Wandung verschraubt, vernietet, verklebt und/oder verschweißt. Wie zuvor erwähnt, ist die Trägereinheit insbesondere austauschbar. Das heißt insbesondere, dass nach einem einmaligen Verbringen der Schutzhülle von dem zusammengefalteten Zustand in den auseinandergefalteten Zustand die Trägereinheit mitsamt der auseinandergefalteten Schutzhülle demontiert wird und durch eine neue Trägereinheit mit einer neuen und zusammengefalteten Schutzhülle ersetzt wird.

Gemäß einer weiteren Ausführungsform weist das Überrollschutzsystem mehrere Trägereinheiten auf, wobei jeder Trägereinheit eine Schutzhülle zugeordnet ist.

Wie zuvor erwähnt, können beliebig viele Trägereinheiten vorgesehen sein. Beispielsweise kann oberhalb und unterhalb der zuvor erwähnten Lukenöffnung jeweils eine Trägereinheit vorgesehen sein. Alternativ kann auch rechts und links der Lukenöffnung jeweils eine Trägereinheit vorgesehen sein. Ferner ist es auch möglich, sowohl oberhalb und unterhalb als auch rechts und links der Lukenöffnung jeweils eine Trägereinheit vorzusehen.

Das Überrollschutzsystem weist eine Sensorik, die dazu eingerichtet ist, eine Verkippung des geschützten Fahrzeugs um zumindest eine Raumrichtung zu erfassen, und eine Regel- und Steuereinheit auf, die dazu eingerichtet ist, den Aktor basierend auf Sensorsignalen der Sensorik derart anzusteuern, dass der Aktor die Schutzhülle unmittelbar vor oder bei dem Überschlag des geschützten Fahrzeugs von dem zusammengefalteten Zustand in den auseinandergefalteten Zustand verbringt.

Die Sensorik kann verschiedenste Sensoren umfassen. Beispielsweise kann die Sensorik einen oder mehrere Neigungssensoren, einen oder mehrere Lagesensoren, einen oder mehrere Beschleunigungssensoren oder dergleichen aufweisen. Die Sensorik ist mit der Regel- und Steuereinheit des Überrollschutzsystems wirkverbunden. Die Wirkverbindung kann drahtgebunden oder drahtlos sein. Die Regel- und Steuereinheit kann ein fahrzeuginternes System, wie beispielsweise ein CAN-Knoten (Engl.: Controller Area Network), oder ein beliebiges Steuergerät sein. Die Regel- und Steuereinheit ist wiederum mit dem Aktor wirkverbunden. Auch hier kann die Wirkverbindung drahtgebunden oder drahtlos sein. Die Regel- und Steuereinheit dient zur Datenauswertung und zur Weitergabe von Steuersignalen an den Aktor. Mit Hilfe der Sensorik kann beispielsweise eine Verkippung des geschützten Fahrzeugs um die x-Richtung, um die y-Richtung und/oder um die z-Richtung erfasst werden. Wird ein bestimmter voreingestellter Grenzwert der Verkippung des geschützten Fahrzeugs überschritten, so dass mit einer gewissen Wahrscheinlichkeit zu erwarten ist, dass sich das geschützte Fahrzeug überschlagen wird, so steuert die Regel- und Steuereinheit den Aktor derart an, dass dieser die Schutzhülle von dem zusammengefalteten Zustand in den auseinandergefalteten Zustand verbringt. Die Sensorik zur Überschlagsdetektion kann ferner auch für weitere Komponenten des geschützten Fahrzeugs genutzt werden, welche spezifische Lageinformationen des geschützten Fahrzeugs benötigen. Dies betrifft beispielsweise eine Waffensensorik einer Bewaffnung des geschützten Fahrzeugs.

Das Überrollschutzsystem weist ein Tragelement zum Tragen des Besatzungsmitglieds und eine Verstelleinheit zum Verstellen einer Höhenposition des Tragelements auf, wobei die Regel- und Steuereinheit dazu eingerichtet ist, die Verstelleinheit basierend auf Sensorsignalen der Sensorik derart anzusteuern, dass die Verstelleinheit unmittelbar vor oder bei dem Überschlag des geschützten Fahrzeugs die Höhenposition des Tragelements derart verstellt, dass sich das Besatzungsmitglied vollständig in das geschützte Fahrzeug hineinverlagert.

Somit kann also die durch die Schutzhülle gewonnene Zeit dazu genutzt werden, das Besatzungsmitglied mit Hilfe des Tragelements und der Verstelleinheit vollständig in das geschützte Fahrzeug hineinzubewegen. Beispielsweise ist die Verstelleinheit mit Hilfe einer Aufhängung an der geschützten Fahrzeugzelle, insbesondere an der Wandung, aufgehängt. Das Tragelement ist bevorzugt innerhalb des Innenraums angeordnet. Mit Hilfe der Verstelleinheit kann eine Position des Tragelements entlang der y-Richtung oder entlang der Hochrichtung des geschützten Fahrzeugs verstellt werden. Unter der "Höhenposition" ist vorliegend die Position des Tragelements entlang der y-Richtung oder entlang der Hochrichtung zu verstehen. Das Tragelement kann ein Sitz für das Besatzungsmitglied sein. Demgemäß können vorliegend die Begriffe "Tragelement" und "Sitz" beliebig gegeneinander getauscht werden. Alternativ kann das Tragelement auch eine Stehplattform für das Besatzungsmitglied sein. Das Besatzungsmitglied kann an einer derartigen Stehplattform festgeschnallt sein, so dass das Besatzungsmitglied bei einem Überschlag des geschützten Fahrzeugs nicht aus der geschützten Fahrzeugzelle herausgeschleudert werden kann. Nachfolgend wird jedoch davon ausgegangen, dass das Überrollschutzsystem ein Tragelement in Form eines Sitzes umfasst. Das Besatzungsmitglied kann an oder auf dem Tragelement in Form eines Sitzes festgeschnallt sein, so dass das Besatzungsmitglied auch in diesem Fall bei einem Überschlag des geschützten Fahrzeugs nicht aus der geschützten Fahrzeugzelle herausgeschleudert werden kann. Für den Fall, dass das Tragelement ein Sitz ist, kann die Verstelleinheit demgemäß als Sitzverstelleinheit bezeichnet werden. Demgemäß sind vorliegend die Begriffe "Verstelleinheit" und "Sitzverstelleinheit" gegeneinander tauschbar.

Gemäß einer weiteren Ausführungsform schützt die Schutzhülle in dem auseinandergefalteten Zustand das Besatzungsmitglied vor Beschuss.

Hierdurch kann eine Doppelfunktion der Schutzhülle verwirklicht werden. Beispielsweise kann die Schutzhülle zum Schutz vor Beschuss mit kleinkalibrigen Feuerwaffen, beispielsweise bis zum Kaliber 7,62 x 51 mm NATO, dienen. Ferner kann die Schutzhülle das Besatzungsmitglied auch vor Splittern schützen. Hierzu kann die Schutzhülle beispielsweise Aramidfasern, insbesondere Kevlar, aufweisen. Die Schutzhülle kann somit Projektile bis zum vorgenannten beispielhaften Kaliber stoppen und/oder ablenken. Um einen Schutz vor Brandmunition zu erhalten, welche die Schutzhülle durchschlägt, kann ein die Schutzhülle füllendes Fluid, insbesondere ein die Schutzhülle füllendes Gas, beispielsweise Stickstoff, brandhemmend sein. Auch die Schutzhülle selbst kann aus einem brandhemmenden Material gefertigt sein. Beispielsweise können auch intumeszente Werkstoffe für die Schutzhülle eingesetzt werden. Derartige intumeszente Werkstoffe nehmen unter Hitzeeinwirkung an Volumen zu und entsprechend an Dichte ab.

Gemäß einer weiteren Ausführungsform weist das Überrollschutzsystem einen Schalter zum Auslösen des Aktors auf, so dass dieser die Schutzhülle ohne einen Überschlag des geschützten Fahrzeugs von dem zusammengefalteten Zustand in den auseinandergefalteten Zustand verbringt.

Somit kann mit Hilfe des Schalters die Sensorik überbrückt und der Aktor direkt ausgelöst werden. Gleichzeitig kann auch, wie zuvor erläutert, das Tragelement in den Innenraum zurückgezogen werden. Der Schalter kann drahtlos oder drahtgebunden mit der Regel- und Steuereinheit wirkverbunden sein. Es kann alternativ auch eine direkte Wirkverbindung zwischen dem Schalter und dem Aktor vorgesehen sein. Zusätzlich oder alternativ kann auch eine Schussdetektionssensorik vorgesehen sein, die beispielsweise einen in Richtung des geschützten Fahrzeugs abgegebenen Schuss, insbesondere optisch und/oder akustisch, detektiert. Beispielsweise kann die Schussdetektionssensorik mehrere Sensoren aufweisen, die an verschiedenen Positionen an dem geschützten Fahrzeug angebracht sind. Die Schussdetektionssensorik kann mit der Regel- und Steuereinheit wirkverbunden sein. Basierend auf Sensorsignalen der Schussdetektionssensorik entscheidet die Regel- und Steuereinheit, ob ein abgeschossenes Projektil dem Besatzungsmitglied schaden kann oder nicht. Im Falle einer hohen Wahrscheinlichkeit eines Schadens für das Besatzungsmitglied durch das Projektil steuert die Regel- und Steuereinheit den Aktor an, um die Schutzhülle von dem zusammengefalteten Zustand in den auseinandergefalteten Zustand zu verbringen. Die Schussdetektionssensorik kann aktiviert oder deaktiviert werden. Hierzu kann ein optionaler weiterer Schalter vorgesehen sein.

Gemäß einer weiteren Ausführungsform füllt der Aktor die Schutzhülle zum Verbringen derselben von dem zusammengefalteten Zustand in den auseinandergefalteten Zustand mit einem Fluid.

Das Fluid kann ein Gas oder eine Flüssigkeit sein. Besonders bevorzugt ist das Fluid ein Gas. Das Fluid kann auch ein expandierender Schaum sein. Für die Entfaltung der Schutzhülle können beispielsweise komprimierte Gase oder Flüssigkeiten eingesetzt werden. Wird ein komprimiertes Gas als Fluid eingesetzt, kann dieses beispielsweise mechanisch freigesetzt werden. In diesem Fall kann beispielsweise ein mechanisches Federpaket das gasförmige Fluid aus einem Kolben und/oder einem Vorratsbehälter in die Schutzhülle drücken. Ferner kann das Fluid in Form des komprimierten Gases auch elektrisch freigesetzt werden. In diesem Fall kann ein elektromechanisches Ventil einen Druckgasbehälter öffnen. Bei einer explosiven Freisetzung des Fluids erzeugt eine explosive Ladung ein freiwerdendes Gasgemisch, welches die Schutzhülle explosionsartig oder schlagartig entfaltet. Wird eine Flüssigkeit als Fluid eingesetzt, so kann diese mechanisch, elektrisch, hydraulisch oder explosiv freigesetzt werden. Bei der mechanischen Freisetzung drückt beispielsweise ein mechanisches Federpaket das Fluid in Form der Flüssigkeit aus einem Kolben und/oder einem Vorratsbehälter in die Schutzhülle. Bei der hydraulischen Freisetzung befüllt der Aktor die Schutzhülle mit einem hydraulischen Überdruck aus einem Vorratsbehälter. Bei der explosiven Freisetzung des Fluids in Form der Flüssigkeit drückt eine explosive Ladung die Flüssigkeit in die Schutzhülle.

Gemäß einer weiteren Ausführungsform spannt der Aktor die Schutzhülle zum Verbringen derselben von dem zusammengefalteten Zustand in den auseinandergefalteten Zustand mechanisch auf.

Hierunter ist insbesondere zu verstehen, dass der Aktor die Schutzhülle beispielsweise in der Art eines Regenschirms von dem zusammengefalteten Zustand in den auseinandergefalteten Zustand verbringen oder aufspannen kann. Die Schutzhülle ist somit bevorzugt regenschirmartig auseinanderfaltbar und/oder zusammenfaltbar. Insbesondere können auch vorgespannte Federn die Schutzhülle aufspannen. Diese Federn können zaunförmig oder gitterförmig angeordnet sein. Für das Entfalten der Schutzhülle können auch aus Formgedächtnislegierungen gefertigte Bauteile eingesetzt werden.

Ferner wird ein geschütztes Fahrzeug mit zumindest einem derartigen Überrollschutzsystem vorgeschlagen.

Das geschützte Fahrzeug kann mehrere derartige Überrollschutzsysteme aufweisen. Beispielsweise kann das geschützte Fahrzeug mehrere Lukenöffnungen aufweisen, wobei jeder Lukenöffnung ein derartiges Überrollschutzsystem zugeordnet sein kann. Es muss jedoch nicht zwingend jeder Lukenöffnung ein derartiges Überrollschutzsystem zugeordnet sein. Das geschützte Fahrzeug ist insbesondere ein militärisches Fahrzeug. Das geschützte Fahrzeug kann daher auch als Militärfahrzeug bezeichnet werden. Insbesondere ist das geschützte Fahrzeug ein gepanzertes Transportfahrzeug. Das geschützte Fahrzeug kann beispielsweise auch ein Schützenpanzer, ein Kampfpanzer, ein Bergepanzer, ein Minenräumpanzer, ein Spürpanzer oder dergleichen sein. Das geschützte Fahrzeug kann insbesondere auch ein Radpanzer sein. Das geschützte Fahrzeug kann als geschütztes Militärfahrzeug bezeichnet werden. Wie zuvor erwähnt, umfasst das geschützte Fahrzeug die geschützte Fahrzeugzelle. Die geschützte Fahrzeugzelle ist bevorzugt in der Art eines austauschbaren Missionsmoduls gestaltet.

Besonders bevorzugt umfasst das geschützte Fahrzeug ein Überrollschutzsystem mit einer Schutzhülle zum Schützen eines sich teilweise innerhalb und teilweise außerhalb des geschützten Fahrzeugs aufhaltenden Besatzungsmitglieds bei einem Überschlag des geschützten Fahrzeugs und einem der Schutzhülle zugeordnetem Aktor, wobei der Aktor dazu eingerichtet ist, die Schutzhülle unmittelbar vor oder bei dem Überschlag des geschützten Fahrzeugs von einem zusammengefalteten Zustand in einen auseinandergefalteten Zustand zu verbringen, und wobei das Überrollschutzsystem derart an dem geschützten Fahrzeug montiert ist, dass die Schutzhülle in dem auseinandergefalteten Zustand zumindest teilweise außerhalb des geschützten Fahrzeugs angeordnet ist und so Bereiche des Besatzungsmitglieds, die während des Überschlags außerhalb des geschützten Fahrzeugs angeordnet sind, zumindest abschnittsweise umhüllt.

Außerdem wird eine geschützte Fahrzeugzelle für ein derartiges geschütztes Fahrzeug vorgeschlagen. Die geschützte Fahrzeugzelle umfasst ein Überrollschutzsystem mit einer Schutzhülle zum Schützen eines sich teilweise innerhalb und teilweise außerhalb der geschützten Fahrzeugzelle aufhaltenden Besatzungsmitglieds bei einem Überschlag der geschützten Fahrzeugzelle und einem der Schutzhülle zugeordnetem Aktor, wobei der Aktor dazu eingerichtet ist, die Schutzhülle unmittelbar vor oder bei dem Überschlag der geschützten Fahrzeugzelle von einem zusammengefalteten Zustand in einen auseinandergefalteten Zustand zu verbringen, und wobei das Überrollschutzsystem derart an der geschützten Fahrzeugzelle montiert ist, dass die Schutzhülle in dem auseinandergefalteten Zustand zumindest teilweise außerhalb der geschützten Fahrzeugzelle angeordnet ist und so Bereiche des Besatzungsmitglieds, die während des Überschlags außerhalb der geschützten Fahrzeugzelle angeordnet sind, zumindest abschnittsweise umhüllt.

Gemäß einer Ausführungsform weist das geschützte Fahrzeug eine Wandung mit einer Lukenöffnung auf, wobei das Überrollschutzsystem an der Wandung montiert ist, und wobei die Schutzhülle in dem auseinandergefalteten Zustand zumindest teilweise um die Lukenöffnung herumläuft.

Die Schutzhülle kann auch vollständig um die Lukenöffnung herumlaufen. In diesem Fall ist die Schutzhülle beispielsweise rahmenförmig oder ringförmig. Es können jedoch auch, wie zuvor erwähnt, mehrere Schutzhüllen um die Lukenöffnung herum angeordnet sein, welche zusammen in dem auseinandergefalteten Zustand den zuvor erwähnten kuppelförmigen Schutzraum über der Lukenöffnung bilden.

Gemäß einer weiteren Ausführungsform ist die Schutzhülle mit der Wandung verbunden.

Wie zuvor erwähnt, kann die Schutzhülle unmittelbar oder mittelbar mit der Wandung verbunden sein. Bei der unmittelbaren Verbindung mit der Wandung ist die Schutzhülle direkt mit der Wandung verbunden, beispielsweise vernietet, verschraubt und/oder verklebt. Bei der mittelbaren Verbindung kann die Schutzhülle mit der Trägereinheit verbunden sein, welche wiederum an der Wandung angebracht ist.

Die für das vorgeschlagene Überrollschutzsystem beschriebenen Ausführungsformen und Merkmale gelten für das vorgeschlagene geschützte Fahrzeug entsprechend und umgekehrt.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl von Elementen gegeben ist. Vielmehr sind zahlenmäßige Abweichungen nach oben und nach unten möglich, soweit nichts Gegenteiliges angegeben ist.

Weitere mögliche Implementierungen des Überrollschutzsystems und/oder des geschützten Fahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Überrollschutzsystems und/oder des geschützten Fahrzeugs hinzufügen.

Weitere vorteilhafte Ausgestaltungen und Aspekte des Überrollschutzsystems und/oder des geschützten Fahrzeugs sind Gegenstand der Unteransprüche sowie der im Folgenden beschriebenen Ausführungsbeispiele des Überrollschutzsystems und/oder des geschützten Fahrzeugs. Im Weiteren werden das Überrollschutzsystem und/oder das geschützte Fahrzeug anhand von bevorzugten Ausführungsformen unter Bezugnahme auf die beigelegten Figuren näher erläutert.
- Fig. 1: zeigt eine schematische Seitenansicht einer Ausführungsform eines geschützten Fahrzeugs;
- Fig. 2: zeigt eine schematische Aufsicht einer Ausführungsform eines Überrollschutzsystems für das geschützte Fahrzeug gemäß Fig. 1;
- Fig. 3: zeigt eine schematische Schnittansicht des Überrollschutzsystems gemäß der Schnittlinie III-III der Fig. 2;
- Fig. 4: zeigt eine weitere schematische Schnittansicht des Überrollschutzsystems gemäß der Schnittlinie III-III der Fig. 2;
- Fig. 5: zeigt eine schematische Schnittansicht einer Ausführungsform einer Schutzhülle für das Überrollschutzsystem gemäß Fig. 2;
- Fig. 6: zeigt eine weitere schematische Schnittansicht der Schutzhülle gemäß Fig. 5;
- Fig. 7: zeigt eine schematische Schnittansicht einer weiteren Ausführungsform eines Überrollschutzsystems für das geschützte Fahrzeug gemäß Fig. 1; und
- Fig. 8: zeigt eine weitere schematische Schnittansicht des Überrollschutzsystems gemäß Fig. 7.

In den Figuren sind gleiche oder funktionsgleiche Elemente mit denselben Bezugszeichen versehen worden, sofern nichts anderes angegeben ist.

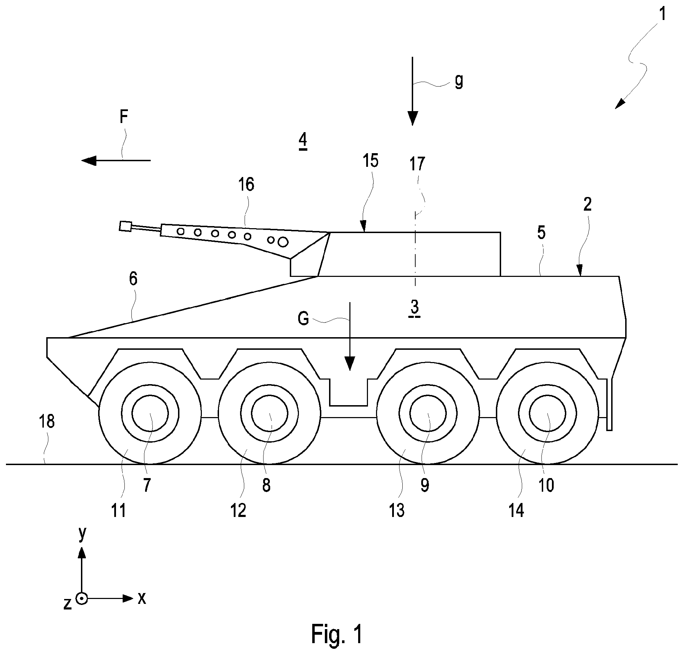

Die Fig. 1 zeigt eine schematische Seitenansicht einer Ausführungsform eines geschützten Fahrzeugs 1.

Das geschützte Fahrzeug 1 wird nachfolgend lediglich als Fahrzeug bezeichnet. Das Fahrzeug 1 kann ein militärisches Fahrzeug, insbesondere ein militärisches Nutzfahrzeug, sein. Das Fahrzeug 1 kann daher auch als Militärfahrzeug oder als Militärnutzfahrzeug bezeichnet werden. Insbesondere ist das Fahrzeug 1 ein gepanzertes Transportfahrzeug. Das Fahrzeug 1 kann beispielsweise auch ein Schützenpanzer, ein Kampfpanzer, ein Bergepanzer, ein Minenräumpanzer, ein Spürpanzer oder dergleichen sein. Das Fahrzeug 1 kann auch ein Radpanzer sein.

Das Fahrzeug 1 umfasst eine geschützte Fahrzeugzelle 2. Im Folgenden wird die geschützte Fahrzeugzelle 2 lediglich als Fahrzeugzelle bezeichnet. Die Fahrzeugzelle 2 kann eine Fahrzeugwanne sein und daher auch als solche bezeichnet werden. Die Begriffe "Fahrzeugzelle" und "Fahrzeugwanne" sind daher beliebig gegeneinander tauschbar. Das Fahrzeug 1 kann bewaffnet oder unbewaffnet sein. Das Fahrzeug 1 kann ein Fahrzeuggewicht von über 20 Tonnen aufweisen.

Die Fahrzeugzelle 2 ist gepanzert. Die Fahrzeugzelle 2 ist insbesondere gegen Beschuss, Sprengfallen, unkonventionelle Spreng- oder Brandvorrichtungen (USBV, Engl.: Improvised Explosive Devices, IED), Minen oder dergleichen geschützt. Die Fahrzeugzelle 2 umschließt einen Fahrzeuginnenraum oder Innenraum 3, in dem sich eine Besatzung des Fahrzeugs 1 aufhalten kann. Der Innenraum 3 ist über nicht gezeigte Türen und/oder Luken von einer Umgebung 4 des Fahrzeugs 1 her zugänglich. Der Innenraum 3 kann in mehrere Abschnitte oder Räume unterteilt sein, die voneinander getrennt sein können. Beispielsweise kann der Innenraum 3 in einen Maschinenraum, einen Besatzungsraum und/oder in einen Fahrzeugführerraum unterteilt sein. Dies ist jedoch nicht zwingend erforderlich.

Die Fahrzeugzelle 2 kann ferner zumindest teilweise oder vollständig modular ausgetauscht werden. In diesem Fall kann das Fahrzeug 1 unterschiedliche Missionsmodule, Missionskits oder Rüstsätze aufweisen, die beliebig austauschbar sind. Als Beispiel für ein derartiges Missionsmodul kann ein Sanitätsmodul genannt werden. Dieser zuvor erläuterte modulare Aufbau ist jedoch beliebig. Die Fahrzeugzelle 2 umfasst beispielsweise ein Dach 5 und eine geneigt zu dem Dach 5 angeordnete Vorderwand 6.

Das Fahrzeug 1 kann ein Radfahrzeug oder ein Kettenfahrzeug sein. Nachfolgend wird jedoch davon ausgegangen, dass das Fahrzeug 1 ein Radfahrzeug ist. Das Fahrzeug 1 umfasst mehrere Radachsen 7, 8, 9, 10, an denen Räder 11, 12, 13, 14 vorgesehen sind. Beispielsweise sind vier Radachsen 7, 8, 9, 10 mit acht Rädern 11, 12, 13, 14 vorgesehen. Es können jedoch auch weniger oder mehr als vier Radachsen 7, 8, 9, 10 vorgesehen sein. Unter einer "Radachse" ist vorliegend eine Achse zu verstehen, um die sich das jeweilige Rad 11, 12, 13, 14 dreht.

Die Anzahl der Radachsen 7, 8, 9, 10 ist grundsätzlich beliebig. Beispielsweise können vier Radachsen 7, 8, 9, 10 oder drei Radachsen 7, 8, 9, 10 vorgesehen sein. Jeder Radachse 7, 8, 9, 10 sind zwei Räder 11, 12, 13, 14 zugeordnet. Zumindest die Räder 11, 12 sind lenkbar. Bevorzugt sind jedoch alle Räder 11, 12, 13, 14 lenkbar. Vorzugsweise umfasst das Fahrzeug 1 einen Allradantrieb. Das heißt, alle Radachsen 7, 8, 9, 10 sind angetrieben.

Das Fahrzeug 1 kann einen Turm 15 mit einer Bewaffnung 16 aufweisen. Der Turm 15 ist drehbar an der Fahrzeugzelle 2 gelagert. Der Turm 15 kann eine elektrische oder hydraulische Antriebseinheit umfassen, um den Turm 15 um eine Drehachse 17 relativ zu der Fahrzeugzelle 2 zu drehen. Der Turm 15 kann jedoch auch manuell betrieben werden, falls die Antriebseinheit ausfällt. Die Bewaffnung 16 kann eine Maschinenkanone oder dergleichen sein. Die Bewaffnung 16 kann eine Primärbewaffnung oder Hauptbewaffnung sein. Es kann zusätzlich eine Sekundärbewaffnung, beispielsweise in Form eines Maschinengewehrs, vorgesehen sein.

Dem Fahrzeug 1 ist ein Koordinatensystem mit einer ersten Raumrichtung, Längsrichtung oder x-Richtung x, einer zweiten Raumrichtung, Hochrichtung oder y-Richtung y und einer dritten Raumrichtung, Querrichtung oder z-Richtung z zugeordnet. Die Richtungen x, y, z sind senkrecht zueinander orientiert. Eine Bewegung des Fahrzeugs 1 um die x-Richtung x kann als Rollen oder Rollbewegung bezeichnet werden. Eine Bewegung des Fahrzeugs 1 um die y-Richtung y kann als Gieren oder Gierbewegung bezeichnet werden. Eine Bewegung des Fahrzeugs 1 um die z-Richtung z kann als Nicken oder Nickbewegung bezeichnet werden.

Eine Schwerkraftrichtung g kann im Wesentlichen entgegen der y-Richtung y orientiert sein. Eine Gewichtskraft G des Fahrzeugs 1 wirkt entlang der Schwerkraftrichtung g. Das Fahrzeug 1 kann sich entlang einer Fahrtrichtung F und entgegen der Fahrtrichtung F auf einem Boden oder Untergrund 18 fortbewegen. Die Fahrtrichtung F kann entgegen der x-Richtung x orientiert sein. Der Untergrund 18 kann eine Fahrbahn oder ein beliebiges Gelände sein.

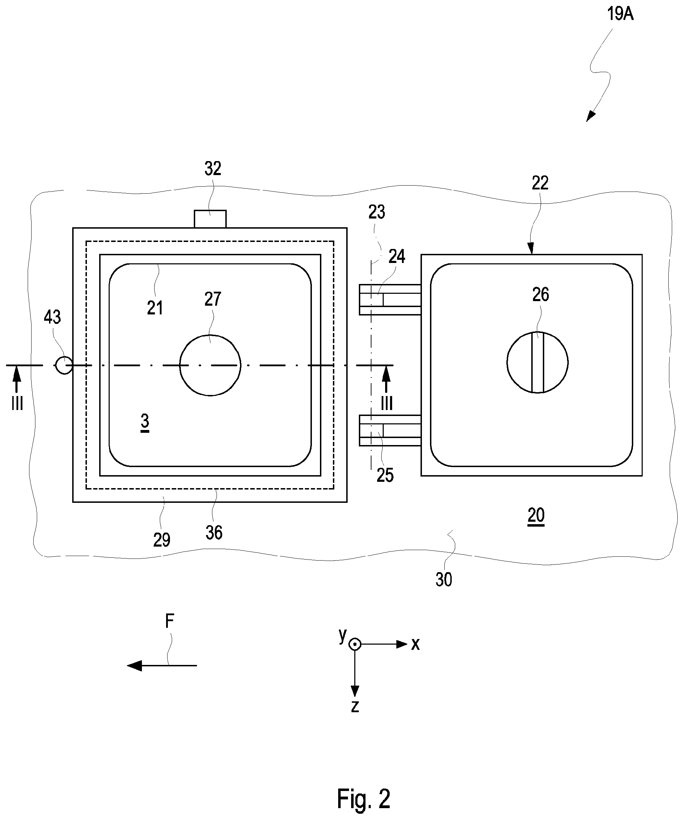

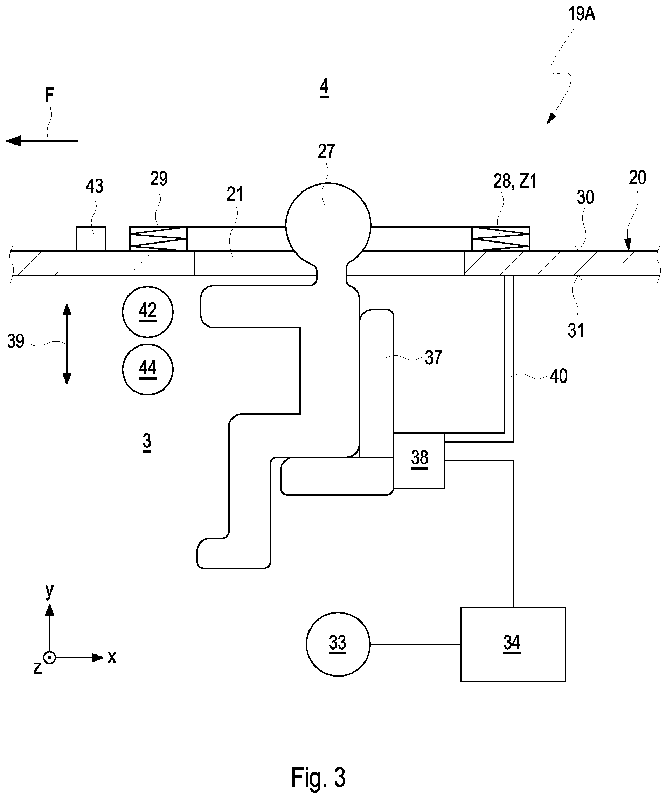

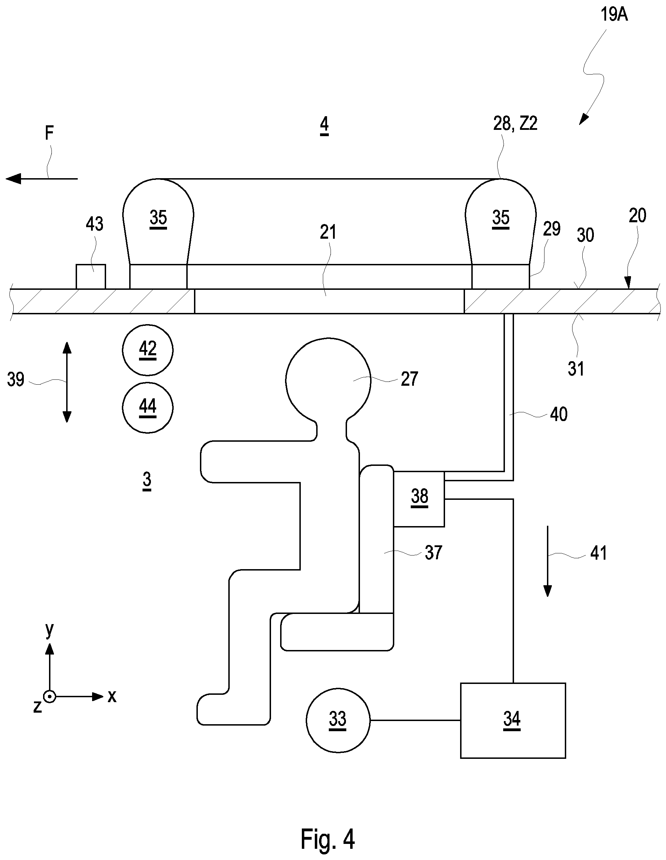

Die Fig. 2 zeigt eine schematische Aufsicht einer Ausführungsform eines Überrollschutzsystems 19A für das Fahrzeug 1. Die Fig. 3 zeigt eine schematische Schnittansicht des Überrollschutzsystems 19A. Die Fig. 4 zeigt eine weitere schematische Schnittansicht des Überrollschutzsystems 19A. Nachfolgend wird auf die Fig. 2 bis 4 gleichzeitig Bezug genommen.

An einer Wandung 20 der Fahrzeugzelle 2, insbesondere an dem Dach 5 oder an der Vorderwand 6, ist eine Lukenöffnung 21 vorgesehen, über welche der Innenraum 3 in die Umgebung 4 verlassen oder der Innenraum 3 von der Umgebung 4 aus betreten werden kann. Die Wandung 20 kann beispielsweise Teil des Dachs 5 oder der Vorderwand 6 sein. Die Wandung 20 kann horizontal verlaufen. Die Wandung 20 kann jedoch auch schräg oder vertikal angeordnet sein.

Das Fahrzeug 1 kann beliebig viele Lukenöffnungen 21 aufweisen. Beispielsweise kann auch an dem Turm 15 eine derartige Lukenöffnung 21 vorgesehen sein. Demgemäß kann die Wandung 20 auch Teil des Turms 15 sein. Die Lukenöffnung 21 kann eine beliebige Geometrie aufweisen. Beispielsweise kann die Lukenöffnung 21 rechteckförmig oder rund sein. Entlang der z-Richtung z betrachtet kann die Lukenöffnung 21 links oder rechts von dem Turm 15 platziert sein.

Der Lukenöffnung 21 ist ein Lukendeckel 22 zugeordnet, mit dessen Hilfe die Lukenöffnung 21 verschlossen werden kann. Der Lukendeckel 22 ist in den Fig. 3 und 4 nicht gezeigt. Der Lukendeckel 22 kann ein Klapplukendeckel, ein Schiebelukendeckel, ein Hublukendeckel oder ein Deckel mit einer kombinierten translatorischen und rotatorischen Öffnungs- und Schließbewegung sein. Nachfolgend wird davon ausgegangen, dass der Lukendeckel 22 ein Klapplukendeckel ist. Das heißt, dass der Lukendeckel 22 um eine Drehachse 23 drehbar an der Wandung 20 gelagert ist. Die Drehachse 23 kann parallel zu der z-Richtung z verlaufen.

Dabei kann der Lukendeckel 22 von einer nicht gezeigten geschlossenen Position in eine in der Fig. 2 gezeigte geöffnete Position verbracht werden. Der Lukendeckel 22 kann in seiner geöffneten Position verriegelt werden, so dass sich der Lukendeckel 22 auch bei einem Überschlag des Fahrzeugs 1 nicht selbsttätig schließen kann.

Der Lukendeckel 22 ist mit Hilfe von Scharnieren 24, 25 an der Wandung 20 angeschlagen. In der geöffneten Position kann der Lukendeckel 22 auf der Wandung 20 aufliegen. Dies ist jedoch nicht zwingend erforderlich. Der Lukendeckel 22 kann in der geöffneten Position auch nicht an der Wandung 20 anliegen. Der Lukendeckel 22 kann eine Verriegelungseinheit 26 zum Verriegeln und Entriegeln des Lukendeckels 22 aufweisen.

Bei einem derartigen Fahrzeug 1 kann es unter anderem aufgrund der unübersichtlichen Fahrzeuggeometrie erforderlich sein, dass einzelne Besatzungsmitglieder 27 über Luke fahren. Dies kann stehend oder sitzend erfolgen. "Über Luke" heißt dabei, dass zumindest der Kopf des jeweiligen Besatzungsmitglieds 27 aus der Lukenöffnung 21 in die Umgebung 4 hineinragt. Dies kann zum Beispiel für die Unterstützung des Fahrers durch den Kommandanten oder für eine bessere Führbarkeit des Fahrzeugs 1 im zivilen Straßenverkehr erforderlich sein. Dieser Umstand kann dazu führen, dass im Falle eines Überschlags des Fahrzeugs 1 das über Luke fahrende Besatzungsmitglied 27 tödlichen Gefahren ausgesetzt ist. Im schlimmsten Fall kann es dazu kommen, dass das Besatzungsmitglied 27 durch das Fahrzeug 1 zerquetscht und somit tödlich verletzt wird.

Um die vorgenannte Problematik zu entschärfen, ist das nachfolgend erläuterte Überrollschutzsystem 19A vorgesehen. Jeder Lukenöffnung 21 des Fahrzeugs 1 kann ein derartiges Überrollschutzsystem 19A zugeordnet sein. Das Überrollschutzsystem 19A umfasst eine Schutzhülle 28, die in einer Aufnahmeeinheit oder Trägereinheit 29 aufgenommen ist. Die Schutzhülle 28 kann auch als Schutzschild oder als Schutzschirm bezeichnet werden. Die Begriffe "Schutzhülle", "Schutzschild" und "Schutzschirm" können demgemäß beliebig gegeneinander getauscht werden. Das Überrollschutzsystem 19A ist insbesondere auch für Fahrzeuggewichte von über 20 Tonnen geeignet.

Die Schutzhülle 28 ist flexibel. Die Schutzhülle 28 kann daher auch als flexible Schutzhülle bezeichnet werden. "Flexibel" in diesem Zusammenhang bedeutet, dass die Schutzhülle 28 durch einen geringen Kraftaufwand verformt werden kann. "Flexibel" ist jedoch nicht gleichzusetzen damit, dass die Schutzhülle 28 elastisch verformt, insbesondere gedehnt, werden kann. Das heißt insbesondere, dass die Schutzhülle 28 bevorzugt nicht elastisch verformbar ist.

Die Schutzhülle 28 kann in der Trägereinheit 29 zusammengefaltet oder zusammengerollt angeordnet sein. Hierdurch nimmt die Schutzhülle 28 nur wenig Platz ein. Das Überrollschutzsystem 19A ist nachrüstbar. Das heißt, dass das Überrollschutzsystem 19A auch bei Fahrzeugen (nicht gezeigt) eingesetzt werden kann, die ab Werk kein derartiges Überrollschutzsystem 19A aufweisen. Die Trägereinheit 29 ist außerhalb des Innenraums 3 platziert. Insbesondere ist die Trägereinheit 29 der Umgebung 4 zugewandt. In der geschlossenen Position des Lukendeckels 22 kann dieser die Trägereinheit 29 zumindest abschnittsweise abdecken. Die Trägereinheit 29 kann zumindest abschnittsweise aus einem Kunststoffmaterial gefertigt sein.

Die zusammengefaltete oder zusammengerollte Schutzhülle 28 ist in der Trägereinheit 29 aufgenommen. Die Trägereinheit 29 kann kastenförmig sein. Die Trägereinheit 29 kann beispielsweise an einer Außenseite 30 der Wandung 20 angebracht sein. Die Außenseite 30 ist der Umgebung 4 zugewandt. Eine der Außenseite 30 abgewandte Innenseite 31 der Wandung 20 ist dem Innenraum 3 zugewandt. Beispielsweise ist die Trägereinheit 29 mit der Außenseite 30 verschraubt, vernietet, verklebt, und/oder verschweißt. Die Trägereinheit 29 kann auch derart in die Wandung 20 integriert sein, dass die Trägereinheit 29 nicht über die Außenseite 30 herausragt.

Die Trägereinheit 29 kann rahmenförmig um die Lukenöffnung 21 umlaufen. Für den Fall, dass die Lukenöffnung 21 rund ist, kann die Trägereinheit 29 ringförmig sein und um die Lukenöffnung 21 herumlaufen. Die Trägereinheit 29 muss nicht zwingend vollständig um die Lukenöffnung 21 umlaufen. Es können auch mehrere Trägereinheiten 29 vorgesehen sein, die in der Orientierung der Fig. 2 beispielsweise oberhalb, unterhalb, links und/oder rechts von der Lukenöffnung 21 angeordnet sind.

Neben der in der Trägereinheit 29 aufgenommenen Schutzhülle 28 weist das Überrollschutzsystem 19A zumindest einen Aktor 32 (Fig. 2) auf. Es können mehrere Aktoren 32 vorgesehen sein. Für den Fall, dass mehrere Schutzhüllen 28 vorgesehen sind, sind auch mehrere Aktoren 32 vorgesehen. Nachfolgend wird auf nur einen Aktor 32 eingegangen. Der Aktor 32 kann ein Gasgenerator sein. Insbesondere kann der Aktor 32 ein pyrotechnischer Gasgenerator, ein Kaltgasgeneratoren oder ein Hybridgasgenerator sein. Der Aktor 32 kann ebenfalls an der Außenseite 30 angebracht sein. Mit Hilfe des Aktors 32 kann die Schutzhülle 28 entfaltet, aufgeblasen oder entrollt werden. Der Aktor 32 kann in die Trägereinheit 29 integriert sein.

Das Überrollschutzsystem 19A umfasst ferner eine Sensorik 33. Die Sensorik 33 kann verschiedenste Sensoren umfassen. Beispielsweise kann die Sensorik 33 einen oder mehrere Neigungssensoren, einen oder mehrere Lagesensoren, einen oder mehrere Beschleunigungssensoren oder dergleichen aufweisen. Die Sensorik 33 ist mit einer Regel- und Steuereinheit 34 des Überrollschutzsystems 19A wirkverbunden. Die Wirkverbindung kann drahtgebunden oder drahtlos sein. Die Regel- und Steuereinheit 34 kann ein fahrzeuginternes System, wie beispielsweise ein CAN-Knoten (Engl.: Controller Area Network), oder ein beliebiges Steuergerät sein. Die Regel- und Steuereinheit 34 ist wiederum mit dem Aktor 32 wirkverbunden. Auch hier kann die Wirkverbindung drahtgebunden oder drahtlos sein. Die Regel- und Steuereinheit 34 dient zur Datenauswertung und zur Weitergabe von Steuersignalen an den Aktor 32.

Mit Hilfe der Sensorik 33 kann beispielsweise eine Bewegung oder Verkippung des Fahrzeugs 1 um die x-Richtung x, um die y-Richtung y und/oder um die z-Richtung z erfasst werden. Die Bewegung oder Verkippung des Fahrzeugs 1 kann eine kombinierte Roll-, Gier- und/oder Nickbewegung sein. Wird ein bestimmter voreingestellter Grenzwert der Verkippung überschritten, so dass zu erwarten ist, dass sich das Fahrzeug 1 überschlägt, so steuert die Regel- und Steuereinheit 34 den Aktor 32 derart an, dass dieser die Schutzhülle 28 von einem zusammengerollten oder zusammengefalteten Zustand Z1 (Fig. 3) in einen auseinandergerollten oder auseinandergefalteten Zustand Z2 (Fig. 4) entfaltet oder entrollt. In dem auseinandergefalteten Zustand Z2 nimmt die Schutzhülle 28 ein Vielfaches eines Bauraums ein, den die Schutzhülle 28 in dem zusammengefalteten Zustand Z1 einnimmt.

Die Sensorik 33 kann auch einen oder mehrere Sensoren umfassen, die dazu geeignet sind, zu erfassen, ob der Lukendeckel 22 geöffnet oder geschlossen ist. Sofern der Lukendeckel 22 geschlossen ist, kann das Überrollschutzsystem 19A und insbesondere der Aktor 32 deaktiviert sein. Dies verhindert ein unerwünschtes Auslösen des Überrollschutzsystems 19A bei geschlossener Lukenöffnung 21. Wie zuvor erwähnt, kann die Sensorik 33 aus diesem Grund dazu geeignet sein, zu erfassen, ob der Lukendeckel 22 geöffnet oder geschlossen ist. Im einfachsten Fall wird durch den geschlossenen Lukendeckel 22 ein an der Lukenöffnung 21 oder an dem Lukendeckel 22 montierter Schalter geöffnet oder geschlossen, der Teil der Sensorik 33 sein kann.

Die Sensorik 33 zur Überschlagsdetektion kann außerdem auch für weitere Komponenten des Fahrzeugs 1 genutzt werden, welche spezifische Lageinformationen des Fahrzeugs 1 benötigen. Dies betrifft beispielsweise eine Waffensensorik der Bewaffnung 16.

Zum Entfalten oder Entrollen der Schutzhülle 28 kann der Aktor 32 beispielsweise schlagartig oder explosionsartig ein Fluid 35 freisetzen. Für den Fall, dass mehrere Aktoren 32 vorgesehen sind, füllen diese die Schutzhülle 28 gemeinsam mit dem Fluid 35. Das Fluid 35 kann ein Gas oder eine Flüssigkeit sein. Das Verbringen der Schutzhülle 28 von dem zusammengefalteten Zustand Z1 in den auseinandergefalteten Zustand Z2 kann innerhalb von Bruchteilen von Sekunden, beispielsweise innerhalb von etwa 20 bis 50 Millisekunden, erfolgen.

Wenn das Fluid 35 freigesetzt wird, entrollt oder entfaltet sich die Schutzhülle 28, dadurch öffnet sich die Trägereinheit 29 und die Schutzhülle 28 entfaltet sich aus der Trägereinheit 29 heraus in den auseinandergefalteten Zustand Z2. Hierzu kann die Trägereinheit 29 eine oder mehrere Klappen oder eine Sollbruchstelle 36 (Fig. 2) in Form einer Perforation aufweisen, entlang der sich die Trägereinheit 29 öffnet und die Schutzhülle 28 freigibt. Die Schutzhülle 28 bleibt dabei jedoch fest mit der Trägereinheit 29 oder mit der Außenseite 30 der Wandung 20 verbunden.

Bei der Ausführungsform des Überrollschutzsystems 19A gemäß den Fig. 2 bis 4 ist die Schutzhülle 28 einteilig und bildet in dem auseinandergefalteten Zustand Z2 eine ringförmige oder donutförmige Geometrie, die vollständig um die Lukenöffnung 21 umläuft, wie dies in der Fig. 4 gezeigt ist. Für den Fall, dass die Trägereinheit 29 rahmenförmig ist, weist auch die entfaltete Schutzhülle 28 eine rahmenförmige Geometrie auf. Wenn die Trägereinheit 29 beispielsweise ringförmig ist, ist auch die entfaltete Schutzhülle 28 ringförmig. Die Schutzhülle 28 kann auch elliptisch sein oder jede andere beliebige Geometrie aufweisen.

Im Falle eines Überschlags stürzt das Fahrzeug 1 nun auf die entfaltete Schutzhülle 28, wodurch das über Luke fahrende Besatzungsmitglied 27 wertvolle Sekunden gewinnt, in denen sich das Besatzungsmitglied 27 vollständig in den Innenraum 3 zurückziehen kann, um Verletzungen zu entgehen. Für den Fall, dass das Besatzungsmitglied 27 steht, kann sich das Besatzungsmitglied 27 bei einem Überschlag des Fahrzeugs 1 wegducken. Die Schutzhülle 28 umschließt in dem auseinandergefalteten Zustand Z2 Bereiche, beispielsweise den Kopf, des Besatzungsmitglieds 27, die aus der Lukenöffnung 21 in die Umgebung 4 herausragen. Insbesondere kann die Schutzhülle 28 die vorgenannten Bereiche des Besatzungsmitglieds 27 auch vollständig umhüllen oder einhüllen.

Unter einem "Überschlag" ist vorliegend insbesondere zu verstehen, dass sich das Fahrzeug 1 zumindest auf das Dach 5 oder auf die Vorderwand 6 dreht. Dies schließt jedoch nicht aus, dass sich das Fahrzeug 1 bei einem Überschlag auch zumindest einmal vollständig, das heißt um 360°, oder auch mehrfach um die x-Richtung x, die y-Richtung y und/oder die z-Richtung z dreht.

Für den Fall, dass das Besatzungsmitglied 27 auf einem Tragelement 37 sitzt, kann das Besatzungsmitglied 27 seinen Kopf einziehen oder zur Seite legen. Das Besatzungsmitglied 27 wird so bei einem Überschlag des Fahrzeugs 1 nun vor einem direkten Kontakt mit sich in der Umgebung 4 befindlichen Objekten oder mit dem Untergrund 18 geschützt. Ferner kann das Besatzungsmitglied 27 auch nicht unter dem umgekippten Fahrzeug 1 eingeklemmt werden. Die Schutzhülle 28 ermöglicht somit einen zuverlässigen Schutz des Besatzungsmitglieds 27 bei einem Überschlag des Fahrzeugs 1. Somit können schwere bis tödliche Verletzungen des Besatzungsmitglieds 27 vermieden werden.

Optional ist es auch möglich, dass das Tragelement 37 zeitgleich mit dem Auslösen des Aktors 32 automatisiert in den Innenraum 3 zurückgezogen wird, so dass sich das Besatzungsmitglied 27 im Falle eines Überschlags des Fahrzeugs 1 vollständig innerhalb des Innenraums 3 befindet. Das Tragelement 37 kann hierzu an der Fahrzeugzelle 2, insbesondere an dem Dach 5 oder an der Vorderwand 6, aufgehängt sein. Das Besatzungsmitglied 27 ist an oder auf dem Tragelement 37 festgeschnallt, so dass das Besatzungsmitglied 27 bei einem Überschlag des Fahrzeugs 1 nicht aus der Fahrzeugzelle 2 herausgeschleudert werden kann.

Das Tragelement 37 kann ein Sitz für das Besatzungsmitglied 27 sein. Demgemäß können vorliegend die Begriffe "Tragelement" und "Sitz" beliebig gegeneinander getauscht werden. Alternativ kann das Tragelement 37 auch eine Stehplattform für das Besatzungsmitglied 27 sein. Nachfolgend wird jedoch davon ausgegangen, dass das Überrollschutzsystem 19A ein Tragelement 37 in Form eines Sitzes umfasst. Das Tragelement 37 kann an der Wandung 20 aufgehängt sein, wie nachfolgend noch erläutert wird.

Dem Tragelement 37 ist eine Verstelleinheit 38 zugeordnet, mit deren Hilfe das Tragelement 37 entlang und entgegen der y-Richtung y bewegt werden kann, wie dies in den Fig. 3 und 4 mit Hilfe eines Doppelpfeils 39 angedeutet ist. Für den Fall, dass das Tragelement 37 ein Sitz ist, kann die Verstelleinheit 38 demgemäß als Sitzverstelleinheit bezeichnet werden. Demgemäß sind vorliegend die Begriffe "Verstelleinheit" und "Sitzverstelleinheit" gegeneinander tauschbar.

Die Verstelleinheit 38 kann beispielsweise hydraulisch oder pneumatisch angetrieben werden. Ferner kann die Verstelleinheit 38 auch mit Hilfe eines pyrotechnischen Gasgenerators angetrieben werden. Die Verstelleinheit 38 kann mit Hilfe einer Aufhängung 40 an der Fahrzeugzelle 2, insbesondere an der Innenseite 31 der Wandung 20, aufgehängt sein. Die Aufhängung 40 kann strebenförmig sein. Die Aufhängung 40 kann aus Rohren aufgebaut sein. Das Tragelement 37 und/oder die Verstelleinheit 38 können Teil des Überrollschutzsystems 19A sein.

Die Verstelleinheit 38 ist mit der Regel- und Steuereinheit 34 in Wirkverbindung. Die Wirkverbindung kann drahtlos oder drahtgebunden sein. Beispielsweise steuert die Regel- und Steuereinheit 34 die Verstelleinheit 38 im Falle eines Überschlags des Fahrzeugs 1 derart an, dass sich das Tragelement 37 mitsamt dem Besatzungsmitglied 27 entgegen der y-Richtung y nach unten bewegt, wie in der Fig. 4 mit Hilfe eines Pfeils 41 angedeutet ist. Eine Zeitspanne, in welcher die Schutzhülle 28 wieder zusammenfällt, kann so genutzt werden, um das Tragelement 37 in den Innenraum 3 einzuziehen und so das Besatzungsmitglied 27 vor Verletzungen zu schützen.

Die Schutzhülle 28 kann noch eine weitere Funktion aufweisen. Die Schutzhülle 28 kann auch zum Schutz vor Beschuss mit kleinkalibrigen Feuerwaffen, beispielsweise bis zum Kaliber 7,62 × 51 mm NATO, dienen. Hierzu kann die Schutzhülle 28 beispielsweise Aramidfasern, insbesondere Kevlar, aufweisen. Die Schutzhülle 28 kann somit Projektile bis zum vorgenannten beispielhaften Kaliber stoppen und/oder ablenken. Um einen Schutz vor Brandmunition zu erhalten, welche die Schutzhülle 28 durchschlägt, kann das Fluid 35 brandhemmend sein. Auch die Schutzhülle 28 selbst kann aus einem brandhemmenden Material gefertigt sein. Beispielsweise können auch intumeszente Werkstoffe eingesetzt werden. Derartige intumeszente Werkstoffe nehmen unter Hitzeeinwirkung an Volumen zu und entsprechend an Dichte ab.

Um die Schutzhülle 28 zum Schutz vor Beschuss verwenden zu können, kann ein Schalter 42 vorgesehen sein, mit dessen Hilfe das Besatzungsmitglied 27 ohne einen Überschlag des Fahrzeugs 1 den Aktor 32 direkt auslösen kann, um die Schutzhülle 28 zu entfalten. In diesem Falle wird die Sensorik 33 umgangen. Gleichzeitig kann auch, wie zuvor erläutert, das Tragelement 37 in den Innenraum 3 zurückgezogen werden. Der Schalter 42 kann drahtlos oder drahtgebunden mit der Regel- und Steuereinheit 34 wirkverbunden sein. Es kann alternativ auch eine direkte Wirkverbindung zwischen dem Schalter 42 und dem Aktor 32 vorgesehen sein. In diesem Fall wird auf das Zurückziehen des Tragelements 37 verzichtet.

Zusätzlich oder alternativ kann auch noch eine Schussdetektionssensorik 43 vorgesehen sein, die beispielsweise einen in Richtung des Fahrzeugs 1 abgegebenen Schuss, beispielsweise optisch und/oder akustisch, detektiert. Die Schussdetektionssensorik 43 kann außenseitig an der Wandung 20 angebracht sein. Beispielsweise kann die Schussdetektionssensorik 43 mehrere Sensoren aufweisen, die an verschiedenen Positionen an dem Fahrzeug 1 angebracht sind. Die Schussdetektionssensorik 43 ist mit der Regel- und Steuereinheit 34 wirkverbunden. Die Wirkverbindung kann drahtgebunden oder drahtlos sein.

Basierend auf Sensorsignalen der Schussdetektionssensorik 43 entscheidet die Regel- und Steuereinheit 34, ob ein abgeschossenes Projektil dem Besatzungsmitglied 27 schaden kann oder nicht. Im Falle einer vorab zu definierenden Wahrscheinlichkeit eines Schadens für das Besatzungsmitglied 27 durch das Projektil, steuert die Regel- und Steuereinheit 34 den Aktor 32 an, um die Schutzhülle 28 von dem zusammengefalteten Zustand Z1 in den auseinandergefalteten Zustand Z2 zu verbringen. Die Schussdetektionssensorik 43 kann aktiviert oder deaktiviert werden. Hierzu kann ein optionaler weiterer Schalter 44 vorgesehen sein.

Alternativ kann jedoch auch der Schalter 42 zum Aktivieren oder Deaktivieren der Schussdetektionssensorik 43 eingesetzt werden. Somit kann beispielsweise durch ein Betätigen des Schalters 42 nicht unmittelbar der Aktor 32 angesteuert, sondern nur die Schussdetektionssensorik 43 aktiviert werden. Besonders bevorzugt weist die Schussdetektionssensorik 43 jedoch den separaten Schalter 44 auf. Im Hinblick auf die Schalter 42, 44 kann vorliegend unter einem "Schalter" auch ein Bereich eines Berührbildschirms (Engl.: Touchscreen) eines Rechners oder einer anderen Bedieneinheit zu verstehen sein. Dieser Rechner kann Teil der Regel- und Steuereinheit 34 sein.

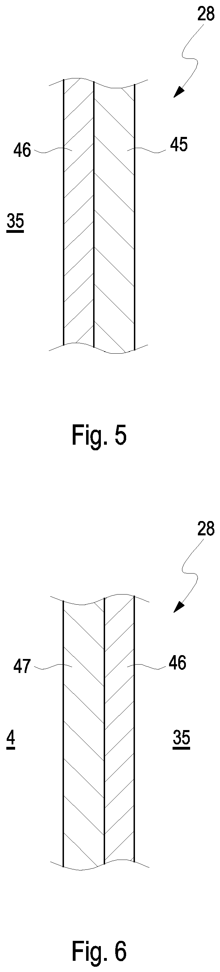

Die Fig. 5 zeigt eine schematische Schnittansicht einer Ausführungsform einer wie zuvor erwähnten Schutzhülle 28. Die Fig. 6 zeigt eine weitere schematische Schnittansicht der Schutzhülle 28. Nachfolgend wird auf die Fig. 5 und 6 gleichzeitig Bezug genommen.

Die Fig. 5 zeigt eine Schnittansicht der Schutzhülle 28, bei der in der Orientierung der Fig. 4 rechts von der Schnittansicht der Kopf des Besatzungsmitglieds 27 angeordnet wäre. Das heißt, dass links von der Schutzhülle 28 ein mit dem Fluid 35 gefüllter Raum vorgesehen ist. Die Schutzhülle 28 ist mehrlagig und umfasst eine dem Besatzungsmitglied 27 zugewandte Außenschicht 45, die bevorzugt weich ist, so dass bei einem Kontakt des Kopfs des Besatzungsmitglieds 27 mit der Außenschicht 45 bei einem schlagartigen Entfalten oder Aufblasen der Schutzhülle 28 keine Verletzungen entstehen. Beispielsweise kann die Außenschicht 45 ein Vliesmaterial oder ein anderes weiches Gewebe sein. Die Außenschicht 45 ist nicht zwingend fluiddicht.

Dem Fluid 35 zugewandt weist die Schutzhülle 28 eine zumindest teilweise fluiddichte Innenschicht 46 auf, die das Fluid 35 zumindest eine gewisse Zeit in der Schutzhülle 28 hält. Die Innenschicht 46 kann ein Polyamidgewebe sein. Die Innenschicht 46 kann beschichtet oder unbeschichtet sein. Die Schutzhülle 28 kann Öffnungen aufweisen, durch die das Fluid 35 aus der entfalteten oder aufgeblasenen Schutzhülle 28 gezielt entweichen kann, so dass diese nach wenigen Sekunden zusammenfällt. Die Innenschicht 46 kann schlauchförmig sein.

Die Fig. 6 zeigt eine Schnittansicht der Schutzhülle 28, bei der in der Orientierung der Fig. 6 rechts von der Schnittansicht, der mit dem Fluid 35 gefüllte Raum vorgesehen ist. Auch hier ist die Schutzhülle 28 mehrlagig und umfasst die zuvor erwähnte Innenschicht 46 und eine zu der Umgebung 4 hinweisende Außenschicht 47. Im Gegensatz zu der dem Besatzungsmitglied 27 zugewandten Außenschicht 45 ist die Außenschicht 47 nicht weich, sondern möglichst stabil, um eine Beschädigung der Schutzhülle 28 durch Äste, Splitter oder Beschuss zu verhindern.

Die Außenschicht 47 kann ein Aramidgewebe sein oder aufweisen. Ferner kann die Außenschicht 47 auch mit Keramikkacheln belegt sein, um den Schutz gegen Beschuss zu erhöhen. Die dem Besatzungsmitglied 27 zugewandte Außenschicht 45 und die der Umgebung zugewandte Außenschicht 47 der Schutzhülle 28 können fest miteinander verbunden, insbesondere miteinander vernäht, sein.

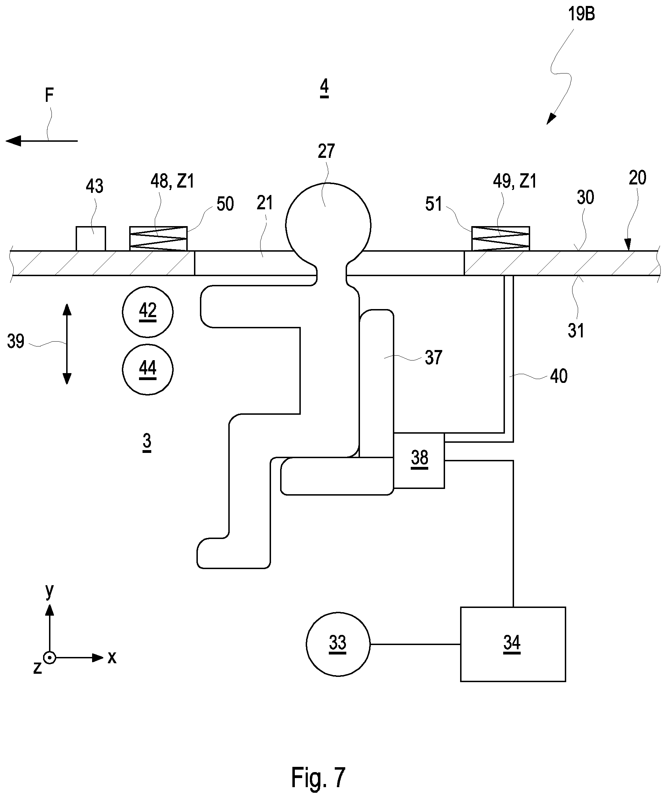

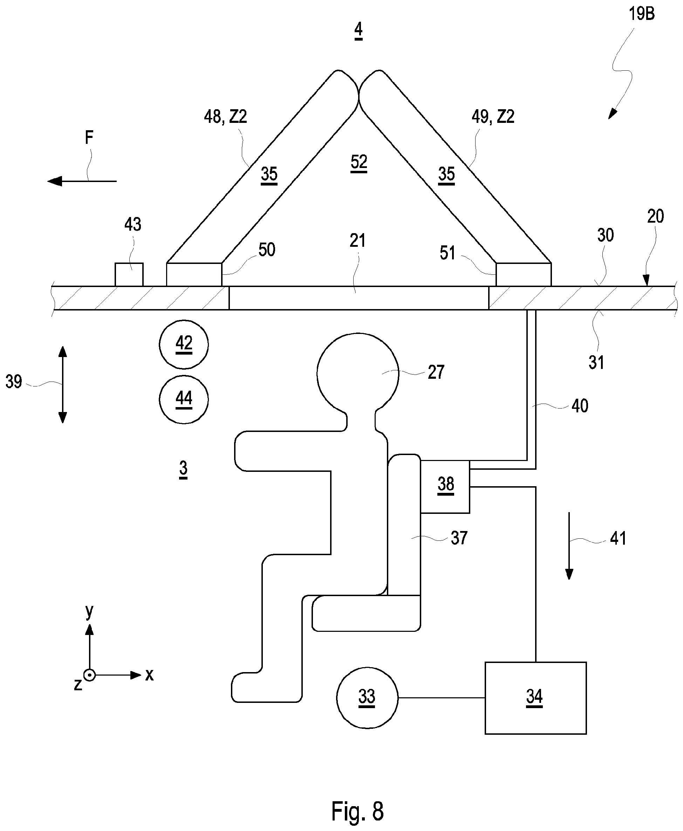

Die Fig. 7 zeigt eine schematische Schnittansicht einer weiteren Ausführungsform eines wie zuvor erläuterten Überrollschutzsystems 19B. Die Fig. 8 zeigt eine weitere schematische Schnittansicht des Überrollschutzsystems 19B. Nachfolgend wird auf die Fig. 7 und 8 gleichzeitig Bezug genommen.

Das Überrollschutzsystem 19B entspricht von seinem Aufbau und seiner Funktionalität her im Wesentlichen dem des Überrollschutzsystems 19A. Daher wird im Folgenden nur auf Unterschiede des Überrollschutzsystems 19B zu dem Überrollschutzsystem 19A eingegangen. Alle vorherigen Ausführungen betreffend das Überrollschutzsystem 19A sind entsprechend auf das Überrollschutzsystem 19B und umgekehrt anwendbar.

Im Unterschied zu dem Überrollschutzsystems 19A weist das Überrollschutzsystem 19B nicht genau eine um die Lukenöffnung 21 umlaufende Schutzhülle 28, sondern zwei Schutzhüllen 48, 49 auf, die in einem wie zuvor erläuterten zusammengefalteten Zustand Z1 innerhalb zweier Trägereinheiten 50, 51 aufgenommen sind. Jeder Trägereinheit 50, 51 ist ein wie zuvor erläuterter Aktor 32 (nicht gezeigt) zugeordnet.

Die Anzahl der Trägereinheiten 50, 51 und damit auch der Schutzhüllen 48, 49 ist beliebig. Beispielsweise sind genau zwei Trägereinheiten 50, 51 mit zwei Schutzhüllen 48, 49 vorgesehen. Die Trägereinheiten 50, 51 sind leistenförmig und sind in der Orientierung der Fig. 7 und 8 entlang der x-Richtung x betrachtet vor und hinter der Lukenöffnung 21 platziert. Zusätzlich oder alternativ können die Trägereinheiten 50, 51 auch rechts und links der Lukenöffnung 21 angeordnet sein.

Wird das Überrollschutzsystem 19B, wie zuvor mit Bezug auf das Überrollschutzsystem 19A erläutert, bei einem Überschlag oder drohenden Überschlag des Fahrzeugs 1 ausgelöst, werden die Schutzhüllen 48, 49 mit Hilfe der Aktoren 32 von dem in der Fig. 7 gezeigten zusammengefalteten Zustand Z1 in einen in der Fig. 8 gezeigten auseinandergefalteten Zustand Z2 verbracht. In dem auseinandergefalteten Zustand Z2 sind die Schutzhüllen 48, 49 plattenförmig oder mattenförmig. Die Schutzhüllen 48, 49 verlaufen schräg über den Kopf des Besatzungsmitglieds 27 und kontaktieren einander, so dass ein kuppelförmiger oder dachförmiger Schutzraum 52 über der Lukenöffnung 21 entsteht. Der Schutzraum 52 kann auch als domförmig bezeichnet werden.

Es ist auch möglich vier Trägereinheiten 50, 51 vorzusehen, wobei dann auch vier, insbesondere dreieckförmige, Schutzhüllen 48, 49 vorgesehen sein können, die in dem auseinandergefalteten Zustand Z2 eine pyramidenförmige Geometrie bilden. In diesem Fall ist dann auch der Schutzraum 52 pyramidenförmig ausgebildet. Die Schutzhüllen 48, 49 können in dem auseinandergefalteten Zustand Z2 jede beliebige dreidimensionale Form einnehmen. Beispielsweise können die Schutzhüllen 48, 49 schalenförmig sein. So kann beispielsweise ein halbkugelförmiger Schutzraum 52 verwirklicht werden. Der Schutzraum 52 kann durch eine geeignete Gestaltung der Schutzhüllen 48, 49 auch kegelstumpfförmig sein.

Die Schutzhülle 28, 48, 49 der verschiedenen Ausführungsformen des Überrollschutzsystems 19A, 19B kann jeweils auch aus einem metallischen Werkstoff gefertigt sein oder einen metallischen Werkstoff aufweisen. Beispielsweise kann die Schutzhülle 28, 48, 49 ein aus einem Metallblech gefertigter Faltenbalg sein. In diesem Fall könnte der Aktor 32 ein Federelement oder mehrere Federelemente aufweisen, die geeignet sind, die metallische Schutzhülle 28, 48, 49 bei einem Überschlag des Fahrzeugs 1 von dem zusammengefalteten Zustand Z1 in den auseinandergefalteten Zustand Z2 zu verbringen. Ferner kann auch für den Fall, dass die Schutzhülle 28, 48, 49 ein metallischer Faltenbalg ist, der Aktor 32 schlagartig ein Fluid 35 freisetzen, um die Schutzhülle 28, 48, 49 von dem zusammengefalteten Zustand Z1 in den auseinandergefalteten Zustand Z2 zu verbringen.

Grundsätzlich kann die Schutzhülle 28, 48, 49 aus beliebigen Werkstoffen gefertigt sein oder beliebige Werkstoffe aufweisen. Beispielsweise kann die Schutzhülle 28, 48, 49 metallische Werkstoffe, keramische Werkstoffe, Verbundwerkstoffe, insbesondere Faserverbundwerkstoffe, und/oder Faserwerkstoffe, insbesondere Fasergewebe oder Fasergelege, beispielsweise umfassend Glasfasern, Kohlenstofffasern, Borfasern, Aramidfasern, Metallfasern oder dergleichen, aufweisen. Die Schutzhülle 28, 48, 49 kann mit beliebigen Materialien beschichtet oder bedampft sein.

Die Funktionalität des Überrollschutzsystems 19A, 19B zusammenfassend, detektiert die Regel- und Steuereinheit 34 basierend auf Sensorsignalen der Sensorik 33 einen Überschlag des Fahrzeugs 1 oder einen Grenzwert einer Verkippung des Fahrzeugs 1 um die x-Richtung x und/oder die z-Richtung z, bei dem ein Überschlag des Fahrzeugs 1 zu erwarten ist. Der Aktor 32 ist nicht aktiviert und die Schutzhülle 28, 48, 49 befindet sich in dem zusammengefalteten Zustand Z1 innerhalb der jeweiligen Trägereinheit 29, 50, 51.

Bei der Detektion eines Überschlags des Fahrzeugs 1 wird der Aktor 32 mit Hilfe der Regel- und Steuereinheit 34 angesteuert und erzeugt mit Hilfe eines Verbringens der Schutzhülle 28, 48, 49 von dem zusammengefalteten Zustand Z1 in den auseinandergefalteten Zustand Z2 in wenigen hundert Millisekunden einen Schutz um das Besatzungsmitglied 27 herum. Durch dieses Wirkprinzip wird das Besatzungsmitglied 27 bei einem Überschlag des Fahrzeugs 1 wirksam vor Verletzungen geschützt.

Der Aktor 32 oder die Aktoren 32 stellen die physische Umsetzung von Energie dar. Im Folgenden wird nur auf einen Aktor 32 eingegangen. Wie zuvor erwähnt, kann das Überrollschutzsystem 19A, 19B jedoch auch mehrere Aktoren 32 aufweisen. Der Aktor 32 kann auf unterschiedlichste Arten fungieren. Im Folgenden werden nur einige mögliche Wirkprinzipen des Aktors 32 erläutert. Der Aktor 32 kann mechanisch fungieren. In diesem Fall kann der Aktor 32 beispielsweise Federelemente, insbesondere vorgespannte Federpakete, aufweisen.

Ferner kann der Aktor 32 hydraulisch arbeiten. In diesem Fall kann beispielsweise ein einfacher oder teleskopierbarer Hydraulikzylinder als Aktor 32 eingesetzt werden. Auch ein elektrisch fungierender Aktor 32 ist möglich. Beispielsweise kann ein Motor mit einer Verstelleinrichtung als Aktor 32 verwendet werden. Wie zuvor schon erwähnt, kann der Aktor 32 auch eine Explosivladung aufweisen.

Für die Entfaltung der Schutzhülle 28, 48, 49 können komprimierte Gase, Flüssigkeiten oder Feststoffe, insbesondere Formgedächtnismetalle oder Federn, genutzt werden. Wird ein komprimiertes Gas als Fluid 35 eingesetzt, kann dieses beispielsweise mechanisch freigesetzt werden. In diesem Fall kann beispielsweise ein mechanisches Federpaket das gasförmige Fluid 35 aus einem Kolben und/oder einem Vorratsbehälter in die Schutzhülle 28, 48, 49 drücken. Ferner kann das Fluid 35 in Form des komprimierten Gases auch elektrisch freigesetzt werden. In diesem Fall kann ein elektromechanisches Ventil einen Druckgasbehälter öffnen. Bei einer explosiven Freisetzung des Fluids 35 erzeugt eine explosive Ladung ein freiwerdendes Gasgemisch, welches in die Schutzhülle 28, 48, 49 strömt.

Wird eine Flüssigkeit als Fluid 35 eingesetzt, so kann diese mechanisch, elektrisch, hydraulisch oder explosiv freigesetzt werden. Bei der mechanischen Freisetzung drückt ein mechanisches Federpaket das Fluid 35 in Form der Flüssigkeit aus einem Kolben und/oder einem Vorratsbehälter in die Schutzhülle 28, 48, 49. Bei der hydraulischen Freisetzung befüllt der Aktor 32 die Schutzhülle 28, 48, 49 mit einem hydraulischen Überdruck aus einem Vorratsbehälter. Bei der explosiven Freisetzung des Fluids 35 in Form einer Flüssigkeit drückt eine explosive Ladung die Flüssigkeit in die Schutzhülle 28, 48, 49 hinein.

Bei dem Einsatz eines Feststoffs für den Aktor 32 erfolgt das Entfalten der Schutzhülle 28, 48, 49 mechanisch. In diesem Fall können vorgespannte Federn die Schutzhülle 28, 48, 49 aufspannen. Diese Federn können zaunförmig oder gitterförmig angeordnet sein. Für das Entfalten der Schutzhülle 28, 48, 49 können auch aus Formgedächtnislegierungen gefertigte Bauteile eingesetzt werden.

Wie zuvor erwähnt, kann der Aktor 32 das Fluid 35 auch in Form einer Flüssigkeit freisetzen, um die Schutzhülle 28, 48, 49 von dem zusammengefalteten Zustand Z1 in den auseinandergefalteten Zustand Z2 zu verbringen. Das Fluid 35 kann hierzu unter Druck in einem Speicherbehälter vorgehalten werden. Das Fluid 35 kann auch ein expandierender Schaum sein. Ferner sind auch Kombinationen der vorgenannten Wirkprinzipien möglich. Insbesondere können elektromechanische Wirkprinzipien eingesetzt werden. Es ist auch eine beliebige Kombination von Aktoren 32 mit unterschiedlichen Wirkprinzipien möglich.

Bei der Umsetzung von Energie handelt es sich jeweils insbesondere um einen irreversiblen Prozess. Dies bedeutet, dass nach der Entfaltung der Schutzhülle 28, 48, 49 dieser Entfaltungsprozess nicht wieder rückgängig gemacht werden kann. Die technische Ausgestaltung des verwendeten Aktors 32 ist dabei immer in Kombination mit dem jeweiligen gewählten Aufbau der Schutzhülle 28, 48, 49 zu betrachten.

Die Schutzhülle 28, 48, 49 weist die Funktion auf, nach deren Auslösung das Besatzungsmitglied 27 in den Bereichen außerhalb der Fahrzeuggeometrie vor dem Kontakt mit der Umgebung 4 bei einem Überschlag des Fahrzeugs 1 zu schützen. Die Eigenschaften der Schutzhülle 28, 48, 49 sind dabei so ausgestaltet, dass die dem Besatzungsmitglied 27 zugewandte Außenschicht 45 ausreichenden Schutz für das Besatzungsmitglied 27 bietet, während die der Umgebung 4 zugewandte Außenschicht 47 derart gestaltet ist, dass diese einer möglichst großen mechanischen Belastungen wiedersteht. Dabei muss die Schutzhülle 28, 48, 49 mit der Außenschicht 47 scharfen Gegenständen wie Steinen oder Ästen widerstehen können.

Die Innenschicht 46 zwischen den Außenschichten 45, 47 kann entsprechend des verwendeten Aktors 32 das Fluid 35 zum Entfalten der Schutzhülle 28, 48, 49 aufnehmen. Für den Fall, dass der Aktor 32 ohne ein derartiges Fluid 35 arbeitet, kann die Innenschicht 46 verzichtbar sein.

Die technische Umsetzung der Schutzhülle 28, 48, 49 kann auf unterschiedliche Art und Weise erfolgen. Dabei kann die Schutzhülle 28, wie in den Fig. 2 bis 4 gezeigt, aus nur einem einzelnen Element aufgebaut sein, welches sich beispielsweise von vorne nach hinten und/oder von links nach rechts über dem Besatzungsmitglied 27 ausbreitet. Alternativ kann die Schutzhülle 28 aus mehreren Elementen aufgebaut oder es können mehrere Schutzhüllen 48, 49 vorgesehen sein, welche sich aus unterschiedlichen Richtungen, insbesondere aus mehr als zwei Richtungen, über das Besatzungsmitglied 27 stülpen.

Darüber hinaus lassen sich auch beliebige andere Geometrien mit der Schutzhülle 28, 48, 49 generieren. Neben einer zuvor erwähnten kuppelartigen Ausgestaltung sind auch einfache Geometrien wie Ellipsen oder eine wie in den Fig. 2 bis 4 gezeigte quadratische Kreisform um das Besatzungsmitglied 27 herum möglich, um den gewünschten Schutzeffekt zu erzielen.

### BEZUGSZEICHENLISTE

- 1: Fahrzeug
- 2: Fahrzeugzelle
- 3: Innenraum
- 4: Umgebung
- 5: Dach
- 6: Vorderwand
- 7: Radachse
- 8: Radachse
- 9: Radachse
- 10: Radachse
- 11: Rad
- 12: Rad
- 13: Rad
- 14: Rad
- 15: Turm
- 16: Bewaffnung
- 17: Drehachse
- 18: Untergrund
- 19A: Überrollschutzsystem
- 19B: Überrollschutzsystem
- 20: Wandung
- 21: Lukenöffnung
- 22: Lukendeckel
- 23: Drehachse
- 24: Scharnier
- 25: Scharnier
- 26: Verriegelungseinheit
- 27: Besatzungsmitglied
- 28: Schutzhülle
- 29: Trägereinheit
- 30: Außenseite
- 31: Innenseite
- 32: Aktor
- 33: Sensorik
- 34: Regel- und Steuereinheit
- 35: Fluid
- 36: Sollbruchstelle
- 37: Tragelement
- 38: Verstelleinheit
- 39: Doppelpfeil
- 40: Aufhängung
- 41: Pfeil
- 42: Schalter
- 43: Schussdetektionssensorik
- 44: Schalter
- 45: Außenschicht
- 46: Innenschicht
- 47: Außenschicht
- 48: Schutzhülle
- 49: Schutzhülle
- 50: Trägereinheit
- 51: Trägereinheit
- 52: Schutzraum

- F: Fahrtrichtung
- g: Schwerkraftrichtung
- G: Gewichtskraft
- x: x-Richtung
- y: y-Richtung
- z: z-Richtung
- Z1: Zustand
- Z2: Zustand

## Patentansprüche

1. Geschütztes Fahrzeug (1) mit zumindest einem Überrollschutzsystem (19A, 19B), wobei das Überrollschutzsystem (19A, 19B) aufweist:
eine Schutzhülle (28, 48, 49) zum Schützen eines sich teilweise innerhalb und teilweise außerhalb des geschützten Fahrzeugs (1) aufhaltenden Besatzungsmitglieds (27) bei einem Überschlag des geschützten Fahrzeugs (1),
einen der Schutzhülle (28, 48, 49) zugeordneten Aktor (32),
wobei der Aktor (32) dazu eingerichtet ist, die Schutzhülle (28, 48, 49) unmittelbar vor oder bei dem Überschlag des geschützten Fahrzeugs (1) von einem zusammengefalteten Zustand (Z1) in einen auseinandergefalteten Zustand (Z2) zu verbringen, und
wobei das Überrollschutzsystem (19A, 19B) derart an dem geschützten Fahrzeug (1) montiert ist, dass die Schutzhülle (28, 48, 49) in dem auseinandergefalteten Zustand (Z2) zumindest teilweise außerhalb des geschützten Fahrzeugs (1) angeordnet ist und so Bereiche des Besatzungsmitglieds (27), die während des Überschlags außerhalb des geschützten Fahrzeugs (1) angeordnet sind, zumindest abschnittsweise umhüllt, sodass sich das geschützte Fahrzeug (1) bei einem Überschlag zunächst auf der Schutzhülle (28, 48, 49) abstützt,
eine Sensorik (33), die dazu eingerichtet ist, eine Verkippung des geschützten Fahrzeugs (1) um zumindest eine Raumrichtung (x, y, z) zu erfassen,
eine Regel- und Steuereinheit (34), die dazu eingerichtet ist, den Aktor (32) basierend auf Sensorsignalen der Sensorik (33) derart anzusteuern, dass der Aktor (32) die Schutzhülle (28, 48, 49) unmittelbar vor oder bei dem Überschlag des geschützten Fahrzeugs (1) von dem zusammengefalteten Zustand (Z1) in den auseinandergefalteten Zustand (Z2) verbringt,
ein Tragelement (37) zum Tragen des Besatzungsmitglieds (27), und
eine Verstelleinheit (38) zum Verstellen einer Höhenposition des Tragelements (37),
wobei die Regel- und Steuereinheit (34) dazu eingerichtet ist, die Verstelleinheit (38) basierend auf Sensorsignalen der Sensorik (33) derart anzusteuern, dass die Verstelleinheit (38) unmittelbar vor oder bei dem Überschlag des geschützten Fahrzeugs (1) die Höhenposition des Tragelements (37) derart verstellt, dass sich das Besatzungsmitglied (27) vollständig in das geschützte Fahrzeug (1) hineinverlagert.

2. Geschütztes Fahrzeug nach Anspruch 1,
**gekennzeichnet durch**
mehrere Schutzhüllen (48, 49), die in ihrem auseinandergefalteten Zustand (Z2) um die Bereiche des Besatzungsmitglieds (27), die außerhalb des geschützten Fahrzeugs (1) angeordnet sind, einen zu einer Umgebung (4) des geschützten Fahrzeugs (1) hin abgetrennten Schutzraum (52) bilden.

3. Geschütztes Fahrzeug nach Anspruch 1 oder 2,
**gekennzeichnet durch**
eine Trägereinheit (29, 50, 51), in der die Schutzhülle (28, 48, 49) in dem zusammengefalteten Zustand (Z1) aufgenommen ist, wobei die Schutzhülle (28, 48, 49) in dem auseinandergefalteten Zustand (Z2) zumindest teilweise außerhalb der Trägereinheit (29, 50, 51) angeordnet ist.

4. Geschütztes Fahrzeug nach Anspruch 3,
**dadurch gekennzeichnet,**
**dass** die Schutzhülle (28, 48, 49) bei dem Verbringen derselben von dem zusammengefalteten Zustand (Z1) in den auseinandergefalteten Zustand (Z2) die Trägereinheit (29, 50, 51), insbesondere entlang einer Sollbruchstelle (36), öffnet.

5. Geschütztes Fahrzeug nach Anspruch 3 oder 4,
**dadurch gekennzeichnet,**
**dass** die Trägereinheit (29, 50, 51) an einer Außenseite (30) des geschützten Fahrzeugs (1) montierbar ist.

6. Geschütztes Fahrzeug nach einem der Ansprüche 3 - 5,
**gekennzeichnet durch**
mehrere Trägereinheiten (50, 51), wobei jeder Trägereinheit (50, 51) eine Schutzhülle (48, 49) zugeordnet ist.

7. Geschütztes Fahrzeug nach einem der Ansprüche 1 - 6,
**dadurch gekennzeichnet,**
**dass** die Schutzhülle (28, 48, 49) in dem auseinandergefalteten Zustand (Z2) das Besatzungsmitglied (27) vor Beschuss schützt.

8. Geschütztes Fahrzeug nach einem der Ansprüche 1 - 7,
**gekennzeichnet durch**
einen Schalter (42) zum Auslösen des Aktors (32), so dass dieser die Schutzhülle (28, 48, 49) ohne einen Überschlag des geschützten Fahrzeugs (1) von dem zusammengefalteten Zustand (Z1) in den auseinandergefalteten Zustand (Z2) verbringt.

9. Geschütztes Fahrzeug nach einem der Ansprüche 1 - 8,
**dadurch gekennzeichnet,**
**dass** der Aktor (32) die Schutzhülle (28, 48, 49) zum Verbringen derselben von dem zusammengefalteten Zustand (Z1) in den auseinandergefalteten Zustand (Z2) mit einem Fluid (35) füllt.

10. Geschütztes Fahrzeug nach einem der Ansprüche 1 - 8,
**dadurch gekennzeichnet,**
**dass** der Aktor (32) die Schutzhülle (28, 48, 49) zum Verbringen derselben von dem zusammengefalteten Zustand (Z1) in den auseinandergefalteten Zustand (Z2) mechanisch aufspannt.

11. Geschütztes Fahrzeug nach einem der Ansprüche 1 - 10,
**dadurch gekennzeichnet,**
**dass** das geschützte Fahrzeug (1) eine Wandung (20) mit einer Lukenöffnung (21) aufweist, wobei das Überrollschutzsystem (19A, 19B) an der Wandung (20) montiert ist, und wobei die Schutzhülle (28, 48, 49) in dem auseinandergefalteten Zustand (Z2) zumindest teilweise um die Lukenöffnung (21) herumläuft.

12. Geschütztes Fahrzeug nach Anspruch 11,
**dadurch gekennzeichnet,**
**dass** die Schutzhülle (28, 48, 49) mit der Wandung (20) verbunden ist.

## Claims

1. Protected vehicle (1), comprising at least one rollover protection system (19A, 19B), wherein the rollover protection system (19A, 19B) comprises:
a protective hull (28, 48, 49) for protecting a crew member (27) being located partially inside and partially outside the protected vehicle (1) in the event of a rollover of the protected vehicle (1),
an actor (32) assigned to the protective hull (28, 48, 49),
wherein the actor (32) is configured to transfer the protective hull (28, 48, 49) from a folded state (Z1) to an unfolded state (Z2) immediately before or during the rollover of the protected vehicle (1), and
wherein the rollover protection system (19A, 19B) is mounted on the protected vehicle (1) in such a way that the protective hull (28, 48, 49) is arranged at least partially outside the protected vehicle (1) in the unfolded state (Z2) and thus at least partially envelops regions of the crew member (27) which are arranged outside the protected vehicle (1) during the rollover, such that the protected vehicle (1) initially rests on the protective hull (28, 48, 49) in the event of a rollover,
a sensor technology (33) configured to detect a tilting of the protected vehicle (1) about at least one spatial direction (x, y, z),
a controlling and steering unit (34) configured to control the actor (32) based on sensor signals from the sensor technology (33) in such a way that the actor (32) transfers the protective hull (28, 48, 49) from the folded state (Z1) to the unfolded state (Z2) immediately before or during the rollover of the protected vehicle (1),
a carrier element (37) for carrying the crew member (27), and
an adjustment unit (38) for adjusting a height position of the carrier element (37),
wherein the controlling and steering unit (34) is configured to control the adjustment unit (38) based on sensor signals from the sensor technology (33) in such a way that the adjustment unit (38) adjusts the height position of the carrier element (37) immediately before or during the rollover of the protected vehicle (1) in such a way that the crew member (27) is completely displaced into the protected vehicle (1).

2. Protected vehicle according to claim 1,
**characterized by**
a plurality of protective hulls (48, 49) which, in their unfolded state (Z2), form a protective room (52), which is separated from a surroundings (4) of the protected vehicle (1), around the regions of the crew member (27) which are arranged outside the protected vehicle (1).

3. Protected vehicle according to claim 1 or 2,
**characterized by**
a carrier unit (29, 50, 51) in which the protective hull (28, 48, 49) is accommodated in the folded state (Z1), wherein the protective hull (28, 48, 49) is arranged at least partially outside the carrier unit (29, 50, 51) in the unfolded state (Z2).

4. Protected vehicle according to claim 3,
**characterized in that**
the protective hull (28, 48, 49) opens the carrier unit (29, 50, 51), in particular along a predetermined breaking line (36), when it is transferred from the folded state (Z1) to the unfolded state (Z2).

5. Protected vehicle according to claim 3 or 4,
**characterized in that**
the carrier unit (29, 50, 51) can be mounted on an outer side (30) of the protected vehicle (1).

6. Protected vehicle according to any one of claims 3 - 5,
**characterized by**
a plurality of carrier units (50, 51), wherein each carrier unit (50, 51) is assigned one protective hull (48, 49).

7. Protected vehicle according to any one of claims 1 - 6,
**characterized in that**
the protective hull (28, 48, 49) in the unfolded state (Z2) protects the crew member (27) from being shot at.

8. Protected vehicle according to any one of claims 1 - 7,
**characterized by**
a switch (42) for triggering the actor (32) so that it transfers the protective hull (28, 48, 49) from the folded state (Z1) to the unfolded state (Z2) without the protected vehicle (1) rolling over.

9. Protected vehicle according to any one of claims 1 - 8,
**characterized in that**
the actor (32) fills the protective hull (28, 48, 49) with a fluid (35) to transfer it from the folded state (Z1) to the unfolded state (Z2).

10. Rollover protection system according to any one of claims 1 - 8,
**characterized in that**
**in that** the actor (32) mechanically spans the protective hull (28, 48, 49) to transfer it from the folded state (Z1) to the unfolded state (Z2).

11. Protected vehicle according to any one of claims 1 - 10,
**characterized in that**
the protected vehicle (1) comprises a wall (20) with a hatch opening (21), wherein the rollover protection system (19A, 19B) is mounted on the wall (20), and
wherein the protective hull (28, 48, 49) runs at least partially around the hatch opening (21) in the unfolded state (Z2).

12. Protected vehicle according to claim 11,
**characterized in that**
the protective hull (28, 48, 49) is connected to the wall (20).

## Revendications

1. Véhicule protégé (1) avec au moins un système de protection contre le retournement (19A, 19B), dans lequel le système de protection contre le retournement (19A, 19B) comprend :
une coque de protection (28, 48, 49) pour protéger un membre d'équipage (27) se trouvant partiellement à l'intérieur et partiellement à l'extérieur du véhicule protégé (1) en cas de retournement du véhicule protégé (1), et
un acteur (32) affecté à la coque de protection (28, 48, 49),
dans lequel l'acteur (32) est configuré pour faire passer la coque de protection (28, 48, 49) d'un état plié (Z1) à un état déplié (Z2) immédiatement avant ou pendant le retournement du véhicule protégé (1), et
dans lequel le système de protection contre le retournement (19A, 19B) est monté sur le véhicule protégé (1) de manière à ce que la coque de protection (28, 48, 49) soit disposée au moins partiellement à l'extérieur du véhicule protégé (1) à l'état déplié (Z2) et enveloppe ainsi au moins partiellement les parties du corps du membre de l'équipage (27) qui se trouvent à l'extérieur du véhicule protégé (1) au moment du retournement, de telle sorte que le véhicule protégé (1) repose initialement sur la coque de protection (28, 48, 49) dans le cas d'un renversement,
une technologie de capteurs (33) est configurée pour détecter une inclinaison du véhicule protégé (1) autour d'au moins une direction spatiale (x, y, z),
une unité de commande et de direction (34) est configurée pour commander l'acteur (32) à partir de signaux de capteurs provenant de la technologie des capteurs (33) de manière à ce que l'acteur (32) fasse passer la coque de protection (28, 48, 49) de l'état plié (Z1) à l'état déplié (Z2) immédiatement avant ou pendant le retournement du véhicule protégé (1),
un élément support (37) pour transporter le membre de l'équipage (27), et
une unité de réglage (38) pour ajuster la position en hauteur de l'élément support (37),
dans lequel l'unité de commande et de direction (34) est configurée pour commander l'unité de réglage (38) à partir des signaux des capteurs de la technologie des capteurs (33) de telle sorte que l'unité de réglage (38) ajuste la position en hauteur de l'élément support (37) immédiatement avant ou pendant le retournement du véhicule protégé (1) de telle sorte que le membre de l'équipage (27) soit complètement déplacé à l'intérieur du véhicule protégé (1).

2. Véhicule protégé selon la revendication 1,
**caractérisé par**
plusieurs coques de protection (48, 49) qui, dans leur état déplié (Z2), forment une chambre de protection (52) séparée de l'environnement (4) du véhicule protégé (1), autour des parties du corps du membre de l'équipage (27) qui se trouvent à l'extérieur du véhicule protégé (1).

3. Véhicule protégé selon la revendication 1 ou 2,
**caractérisé par**
une unité de support (29, 50, 51) dans laquelle la coque de protection (28, 48, 49) est logée à l'état plié (Z1), la coque de protection (28, 48, 49) étant disposée au moins partiellement à l'extérieur de l'unité de support (29, 50, 51) à l'état déplié (Z2).

4. Véhicule protégé selon la revendication 3,
**caractérisé par le fait que**
la coque de protection (28, 48, 49) ouvre l'unité de support (29, 50, 51), notamment le long d'une ligne de rupture prédéterminée (36), lors du passage de l'état plié (Z1) à l'état déplié (Z2).

5. Véhicule protégé selon la revendication 3 ou 4,
**caractérisé par le fait que**
l'unité de support (29, 50, 51) peut être montée sur un côté extérieur (30) du véhicule protégé (1).

6. Véhicule protégé selon l'une des revendications 3 à 5,
**caractérisé par**
une pluralité d'unités de support (50, 51), dans laquelle chaque unité de support (50, 51) est affectée à une coque de protection (48, 49).

7. Véhicule protégé selon l'une des revendications 1 à 6,
**caractérisé par le fait que**
la coque de protection (28, 48, 49) à l'état déplié (Z2) protège le membre de l'équipage (27) contre les tirs.

8. Véhicule protégé selon l'une des revendications 1 à 7,
**caractérisé par**
un commutateur (42) pour déclencher l'acteur (32) afin qu'il transfère la coque de protection (28, 48, 49) de l'état plié (Z1) à l'état déplié (Z2) sans que le véhicule protégé (1) ne se retourne.

9. Véhicule protégé selon l'une des revendications 1 à 8,
**caractérisé par le fait que**
l'acteur (32) remplit la coque de protection (28, 48, 49) d'un fluide (35) pour la faire passer de l'état plié (Z1) à l'état déplié (Z2).

10. Véhicule protégé selon l'une des revendications 1 à 8,
**caractérisé par le fait que**
en ce que l'acteur (32) recouvre mécaniquement la coque de protection (28, 48, 49) pour la faire passer de l'état plié (Z1) à l'état déplié (Z2).

11. Véhicule protégé selon l'une des revendications 1 à 10,
**caractérisé par le fait que**
le véhicule protégé (1) comprend une paroi (20) avec une ouverture de l'écoutille (21), dans laquelle le système de protection contre le retournement (19A, 19B) est monté sur la paroi (20), et dans laquelle la coque de protection (28, 48, 49) s'étend au moins partiellement autour de l'ouverture de l'écoutille (21) à l'état déplié (Z2).

12. Véhicule protégé selon la revendication 11,
**caractérisé par le fait que**
la coque de protection (28, 48, 49) est reliée à la paroi (20).
